# EUROPEAN PATENT APPLICATION

(11) **EP 3 829 183 A1**
(43) Date of publication of application: **02.06.2021**
(21) Application number: 19842092.9
(22) Date of filing: 12.07.2019
(51) Int. Cl.: H04N 21/436, H04N 21/433, H04N 21/4363, H04N 21/438

(54) **INFORMATION PROCESSING DEVICE, INFORMATION PROCESSING METHOD, AND PROGRAM**

(30) Priority: 26.07.2018 JP 2018139959
(71) Applicant: Sony Corporation, 108-0075 Tokyo (JP)
(72) Inventor: UCHIMURA, Kouichi, Tokyo 108-0075 (JP); IWATA, Tomoaki, Tokyo 141-8610 (JP)
(74) Representative: Witte, Weller & Partner Patentanwälte mbB
(86) International application number: PCT/JP2019/027626
(87) International publication number: WO 2020/022097

(57) **Abstract**

The present technology relates to an information processing device, an information processing method, and a program that enable the content transmitted by using MMT to be sent to an external device via a network.

An information processing device according to one aspect of the present technology includes: a content acquisition unit that acquires content transmitted by using MMT; and an extraction unit that extracts information from transmission data based on MMT, the information being to be sent, as property information regarding the content, to an external device to which the content is to be sent via a network. The present technology can be applied to a receiver, such as an STB, that receives the content transmitted by using MMT and uploads the content to an external device via a network.

## Description

### TECHNICAL FIELD

The present technology relates to an information processing device, an information processing method, and a program, and more particularly, to an information processing device, an information processing method, and a program that enable the content transmitted by using MMT to be sent to an external device via a network.

### BACKGROUND ART

Content transmission based on a next-generation broadcasting standard is carried out by using MPEG Media Transport (MMT) instead of MPEG-2 TS. By using MMT, content can be transmitted not only through a transmission path for broadcast waves but also through a transmission path for communications such as the Internet.

According to next-generation broadcasting standards, content with higher resolution than High Definition (HD), such as 4K/8K content, is broadcast. In recent years, standards for recording 4K/8K content on a hard disc drive (HDD) or on Blu-ray Disc (registered trademark) (hereinafter referred to as BD as appropriate) have been developed.

### CITATION LIST

### PATENT DOCUMENT

Patent Document 1: Japanese Patent Application Laid-Open No. 2016-103745

### SUMMARY OF THE INVENTION

### PROBLEMS TO BE SOLVED BY THE INVENTION

No standard has been developed yet for transferring the 4K/8K content once recorded on an HDD or the like to an external device via a network or for transferring the 4K/8K content received by a receiver to an external device via a network.

The present technology has been made in view of such circumstances, and is intended to enable the content transmitted by using MMT to be sent to an external device via a network.

### SOLUTIONS TO PROBLEMS

An information processing device according to one aspect of the present technology includes: a content acquisition unit that acquires content transmitted by using MMT; and an extraction unit that extracts information from transmission data based on MMT, the information being to be sent, as property information regarding the content, to an external device to which the content is to be sent via a network.

In one aspect of the present technology, content transmitted by using MMT is acquired, and information is extracted from transmission data based on MMT, the information being to be sent, as property information regarding the content, to an external device to which the content is to be sent via a network.

### EFFECTS OF THE INVENTION

According to the present technology, the content transmitted by using MMT can be sent to an external device via a network.

Note that the effects described above are not restrictive, and any of effects described in the present disclosure may be included.

### BRIEF DESCRIPTION OF DRAWINGS

Fig. 1 is a diagram illustrating a first example of use cases of 4K/8K content.
Fig. 2 is a diagram illustrating a second example of use cases of 4K/8K content.
Fig. 3 is a diagram illustrating a third example of use cases of 4K/8K content.
Fig. 4 is a diagram illustrating an example configuration of a network system.
Fig. 5 is a flowchart for explaining a series of operations of an STB.
Fig. 6 is a flowchart for explaining the device selection carried out in step S2 in Fig. 5.
Fig. 7 is a diagram illustrating an example of M-Search.
Fig. 8 is a diagram showing an example of an M-Search request.
Fig. 9 is a diagram showing an example of a device list.
Fig. 10 is a diagram illustrating an example of acquisition of a device description.
Fig. 11 is a diagram showing an example of a device description.
Fig. 12 is a diagram showing an example of a device description, as continued from Fig. 11.
Fig. 13 is a diagram illustrating an example of acquisition of a video list.
Fig. 14 is a diagram showing an example of an HTTP request making a request for a video list.
Fig. 15 is a diagram showing an example of an HTTP response that includes information indicating a video list.
Fig. 16 is a flowchart for explaining the recording medium selection carried out in step S3 in Fig. 5.
Fig. 17 is a diagram illustrating an example of GetRecordDestinations.
Fig. 18 is a diagram showing an example of a GetRecordDestinations action.
Fig. 19 is a diagram showing an example of a GetRecordDestinations response.
Fig. 20 is a diagram illustrating an example of GetRecordDestinationInfo.
Fig. 21 is a diagram showing an example of a GetRecordDestinationInfo action.
Fig. 22 is a diagram showing an example of a GetRecordDestinationInfo response.
Fig. 23 is a diagram illustrating an example of GetContainerID.
Fig. 24 is a diagram showing an example of a GetContainerID action.
Fig. 25 is a diagram showing an example of a GetContainerID response.
Fig. 26 is a flowchart for explaining the upload of content carried out in step S4 in Fig. 5.
Fig. 27 is a diagram illustrating an example of CreateObject.
Fig. 28 is a diagram showing an example of a CreateObject action.
Fig. 29 is a diagram showing an example of a CreateObject action.
Fig. 30 is a diagram showing an example of a response including importURI.
Fig. 31 is a diagram illustrating an example configuration of a network system according to one embodiment of the present technology.
Fig. 32 is a diagram illustrating a structure of MMT-SI, which is control information for MMT broadcasting.
Fig. 33 is a diagram showing an example of property information.
Fig. 34 is a diagram showing an example of property information.
Fig. 35 is a diagram showing an example of property information.
Fig. 36 is a diagram showing an example of property information.
Fig. 37 is a diagram showing an example of property information.
Fig. 38 is a diagram illustrating an example of MMT transmission data.
Fig. 39 is a diagram showing the syntax of MH-EIT.
Fig. 40 is a diagram showing an example of extracted property information.
Fig. 41 is a diagram showing the syntax of MH-Short_Event_Descriptor().
Fig. 42 is a diagram showing the syntax of MH-Content_Descriptor().
Fig. 43 is a diagram showing the syntax of MH-Extended_Event_Descriptor().
Fig. 44 is a diagram showing the syntax of Video_Component_Descriptor().
Fig. 45 is a diagram showing meanings of information included in Video_Component_Descriptor().
Fig. 46 is a diagram showing the syntax of MH-Parental_Rating_Descriptor().
Fig. 47 is a diagram showing the syntax of MH-Audio_Component_Descriptor().
Fig. 48 is a diagram showing meanings of values of component_type.
Fig. 49 is a diagram showing meanings of values of quality_indicator.
Fig. 50 is a diagram showing the syntax of Content_Copy_Control_Descriptor().
Fig. 51 is a diagram showing the syntax of Content_Usage_Control_Descriptor().
Fig. 52 is a diagram showing an example of reference for property information P15.
Fig. 53 is a diagram showing the syntax of Multimedia_Service_Info_Descriptor().
Fig. 54 is a diagram illustrating an example of MMT transmission data.
Fig. 55 is a diagram showing the syntax of MH-SDT.
Fig. 56 is a diagram showing the syntax of MH-Service Descriptor().
Fig. 57 is a diagram illustrating an example configuration of a TLV stream.
Fig. 58 is a diagram showing the syntax of TLV packet.
Fig. 59 is a diagram showing the syntax of TLV-NIT, which is a TLV-SI.
Fig. 60 is a diagram showing the syntax of Service_List_Descriptor().
Fig. 61 is a diagram illustrating an example of MMT transmission data.
Fig. 62 is a diagram showing the syntax of PLT included in an M2 section message.
Fig. 63 is a diagram showing the syntax of MPT.
Fig. 64 is a diagram showing the syntax of MH-Data_Component_Descriptor().
Fig. 65 is a block diagram illustrating an example hardware configuration of the STB.
Fig. 66 is a block diagram illustrating an example functional configuration of the controller.
Fig. 67 is a flowchart for explaining a series of operations of the STB.
Fig. 68 is a block diagram illustrating an example hardware configuration of a computer.

### MODE FOR CARRYING OUT THE INVENTION

A mode for carrying out the present technology will now be described. Descriptions are provided in the order mentioned below.
1. Use cases of 4K/8K content
2. Process flow of external content transfer
3. Network system with MMT broadcasting
4. Examples of property information
5. Specific examples of reference for property information
6. Configuration and operation of STB
7. Modifications

### <Use cases of 4K/8K content>

### - Use case 1: connection between STB and recorder

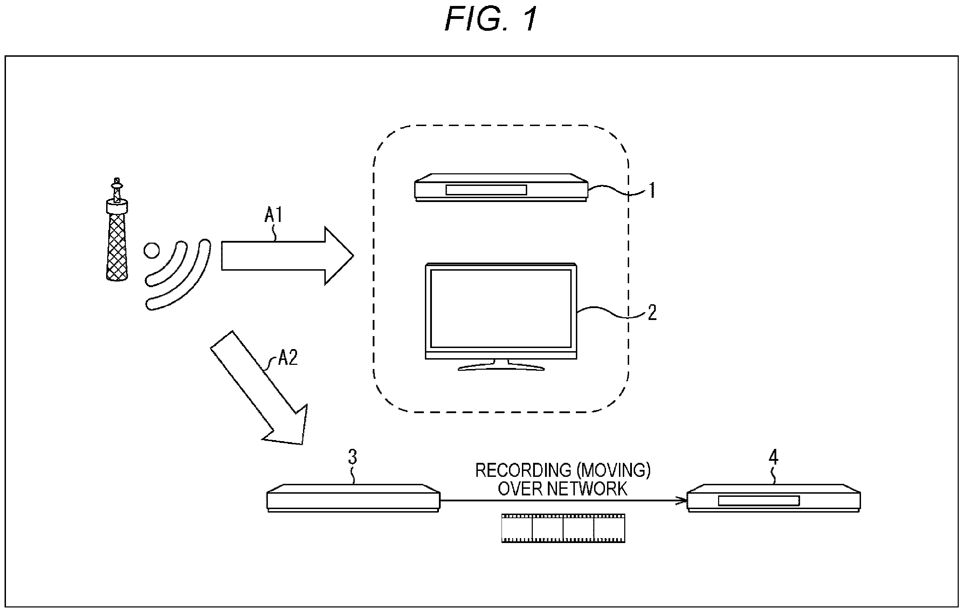

Fig. 1 is a diagram illustrating a first example of use cases of 4K/8K content.

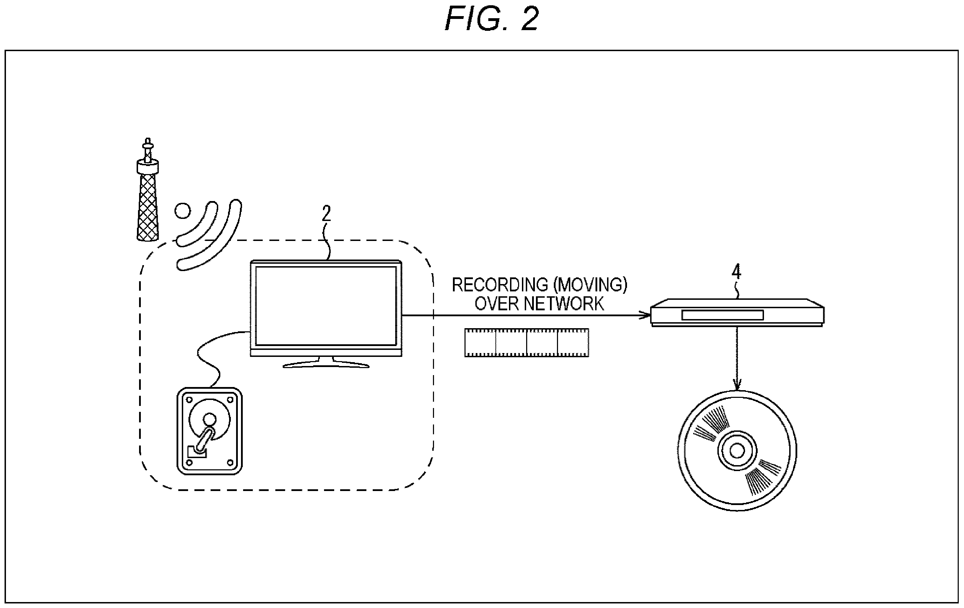

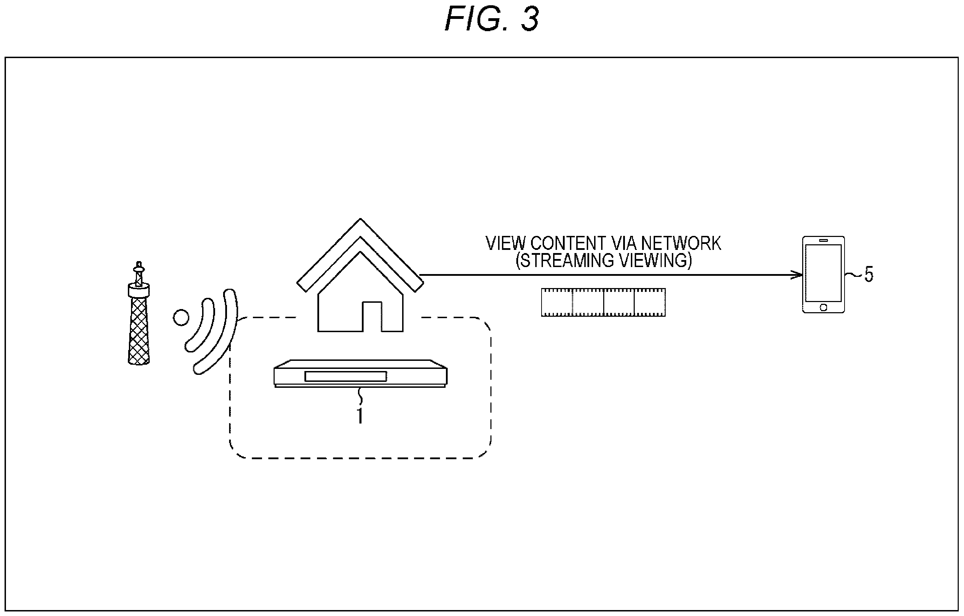

The example in Fig. 1 shows a use case applicable after a television program is broadcast as 4K/8K content and received. The same applies to Figs. 2 and 3.

4K/8K content is a type of content having resolutions higher than HD resolutions, such as 4K resolutions (for example, 3840 × 2160 pixels) or 8K resolutions (for example, 7680 × 4320 pixels). According to a next-generation broadcast standard, broadcasting high dynamic range (HDR) 4K/8K content with a wide dynamic range of brightness is achieved.

There has already been developed a standard for recording the broadcast 4K/8K content on an HDD built in a recorder 1 or for recording the broadcast 4K/8K content on an optical disk such as a BD loaded in the recorder 1, as pointed by an arrow A1.

The recorder 1 is capable of receiving 4K/8K content that has been broadcast and recording it on a recording medium such as a built-in HDD or an optical disk. The 4K/8K content can also be recorded on an external HDD connected to a television (TV) 2.

On the other hand, there has not been developed a standard for receiving the 4K/8K content that has been broadcast in a set top box (STB) 3, transferring the content to a recorder 4 via a network, and recording the content on an HDD built in the recorder 4, as pointed by an arrow A2. The STB 3 is not capable of the so-called moving over a network.

The STB 3 and the recorder 4 in Fig. 1 may be, for example, devices installed in the same home. The STB 3 and the recorder 4 are connected to a home network via a wireless LAN or the like and are enabled to communicate with each other.

Note that in a case where HD content is broadcast by using MPEG-2 TS, the HD content can be moved over a network as described above.

### - Use case 2: Saving 4K/8K content recorded on HDD

Fig. 2 is a diagram illustrating a second example of use cases of 4K/8K content.

In the example in Fig. 2, an external HDD is connected to the TV 2. There has not been developed a standard for transferring the 4K/8K content received by the TV 2 and once recorded on the external HDD to the recorder 4 via a network and recording the content on an optical disk loaded in the recorder 4.

As seen above, the 4K/8K content subjected to the so-called device binding cannot be saved on an optical disk loaded in the recorder 4. Once recorded on the external HDD, the 4K/8K content is associated with the TV 2 and is allowed to be played back and viewed on the TV 2 only.

When the external HDD has no free space, the user becomes unable to record a new piece of 4K/8K content unless any unnecessary 4K/8K content is erased to create a free space.

Note that in a case where HD content broadcast by using MPEG-2 TS is recorded on the external HDD, the HD content can be saved by moving the content over a network.

### - Use case 3: external viewing

Fig. 3 is a diagram illustrating a third example of use cases of 4K/8K content.

In the example in Fig. 3, the recorder 1 installed in the home and a mobile terminal 5 outside the home are enabled to communicate with each other via a network such as the Internet. The mobile terminal 5 is, for example, a device like a smartphone carried by a user who is away from home.

There has not been developed a standard for transmitting the 4K/8K content recorded on an HDD built in the recorder 1 to the mobile terminal 5 via a network and viewing the 4K/8K content on the mobile terminal 5. The user of the mobile terminal 5 is unable to do the so-called streaming viewing, which means the user is unable to view on the mobile terminal 5 the content recorded on the recorder 1 in the home by streaming the content.

Note that in a case where HD content broadcast by using MPEG-2 TS is recorded on an HDD built in the recorder 1, the HD content can be viewed by such streaming viewing.

As described above, no standard has been developed for use cases of the 4K/8K content that is moved over a network.

As described later, a network system according to one aspect of the present technology makes it possible to process such 4K/8K content that is moved over a network.

### <Process flow of external content transfer>

Now, a process flow of the conventional content transfer via a network for the above use cases is described here. The transferred content is HD content that is broadcast in accordance with a conventional standard.

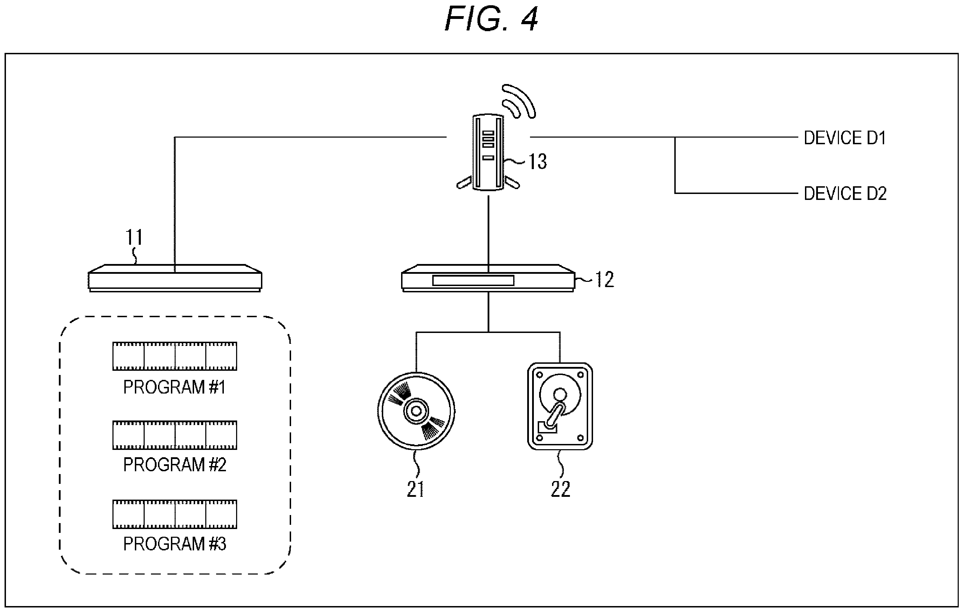

Fig. 4 is a diagram illustrating an example configuration of the network system.

The network system in Fig. 4 is, for example, a system constructed in the home. The network system in Fig. 4 is configured by connecting devices D1 and D2 as well as the STB 11 and the recorder 12 via a router 13. For example, the STB 11 and the recorder 12 are connected to the same TV via High-Definition Multimedia Interface (HDMI) (registered trademark) cables or the like. Alternatively, different TVs may be connected to the STB 11 and the recorder 12, respectively.

The STB 11 receives the content transmitted through a transmission path by broadcasting or through a transmission path by communications such as the Internet. In the example in Fig. 4, programs #1 to #3 have been received.

An optical disk 21 such as a BD is loaded in the drive of the recorder 12. The recorder 12 is a device having a built-in HDD 22. Each of the devices D1 and D2 is a device, such as a recorder, a PC, or a mobile terminal, that supports communications in accordance with Dynamic Host Configuration Protocol (DHCP) as managed by the router 13.

The following describes a series of operations of the STB 11 carried out for uploading (transferring) the content received by the STB 11 to a predetermined device on the network. On the destination device of the upload, the content sent from the STB 11 is recorded, viewed, and so on.

Note that the following mainly describes operations for uploading the content transmitted through a transmission path by broadcasting; however, the process of uploading the content transmitted through a transmission path by communications is carried out in a similar manner.

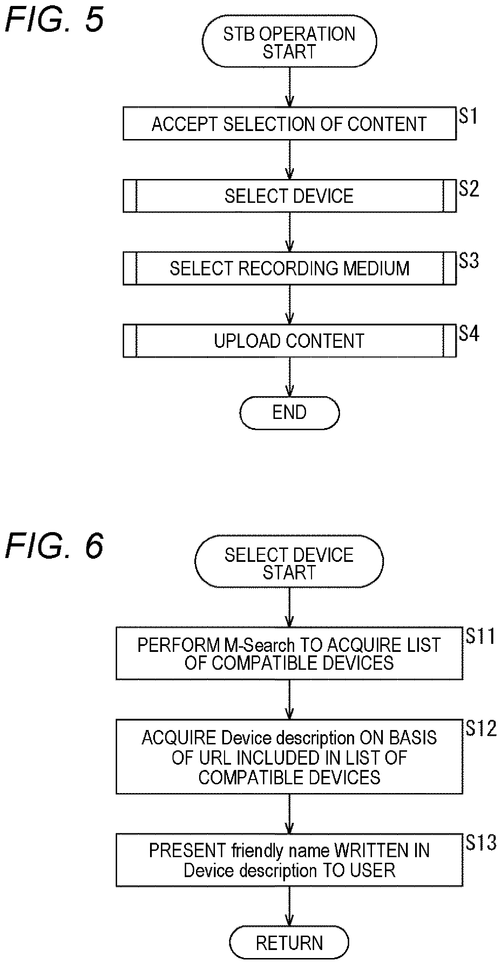

A series of operations of the STB 11 is described below with reference to the flowchart in Fig. 5.

In step S1, the STB 11 accepts selection of the content to be uploaded. For example, the STB 11 displays a program list on a TV (not illustrated) and allows the user to select a program to be uploaded from among the programs being broadcast.

Selection of the content may be accepted after a device or a recording medium is selected.

In step S2, the STB 11 carries out device selection. By selecting a device, the device to which the content is to be uploaded is selected. The device selection will be described later in detail with reference to the flowchart in Fig. 6.

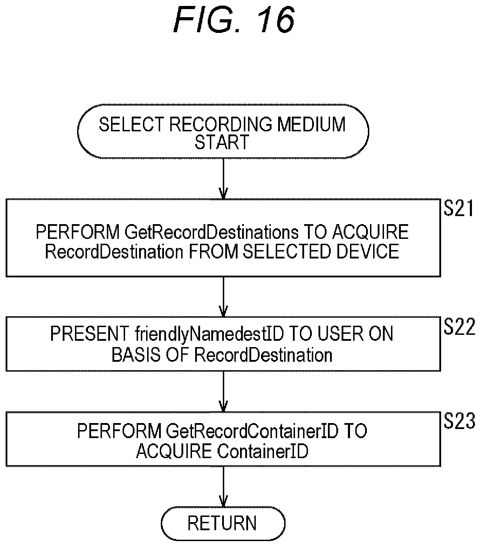

In step S3, the STB 11 carries out recording medium selection. By selecting a recording medium, the recording medium on which the content is to be recorded is selected. A recording medium is selected from the recording media included in the device selected in step S2. The recording medium selection will be described later in detail with reference to the flowchart in Fig. 16.

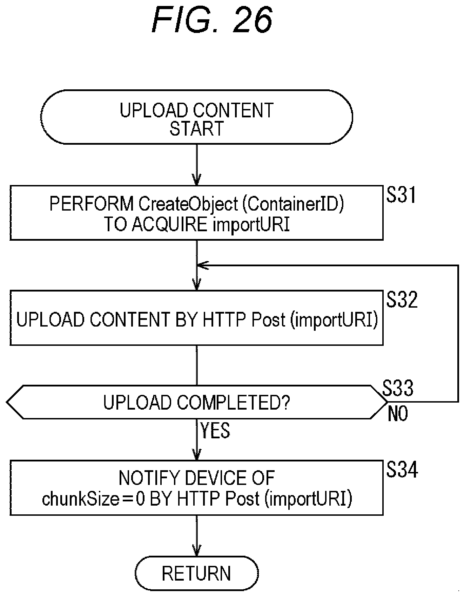

In step S4, the STB 11 uploads the content. Upload of the content will be described later in detail with reference to the flowchart in Fig. 26. When the upload of the target content is completed, the process in Fig. 5 is ended.

### - Selecting a device

Referring to the flowchart in Fig. 6, the following describes the device selection carried out in step S2 in Fig. 5.

In step S11, the STB 11 performs M-Search to acquire a list of compatible devices. M-Search is a method for detecting a device by using Universal Plug and Play (UPnP).

M-Search is performed by a client device multicasting an M-Search request, which is an M-Search message, to every device present in the network to which the client device is connected. From each device that has received the M-Search request, an M-Search response including the URL of the device is sent.

In step S12, the STB 11 acquires a device description from each compatible device on the basis of the URL obtained through M-Search. A device description includes a friendly name, which is a device name, and other information regarding each compatible device.

In step S13, the STB 11 presents the friendly name included in the device description to the user. Looking at the friendly names displayed on, for example, a TV, the user is to select a device to which the content is to be uploaded.

When the destination device of upload is selected, the processing returns to step S2 in Fig. 5 to proceed with the process in step S2 and subsequent steps.

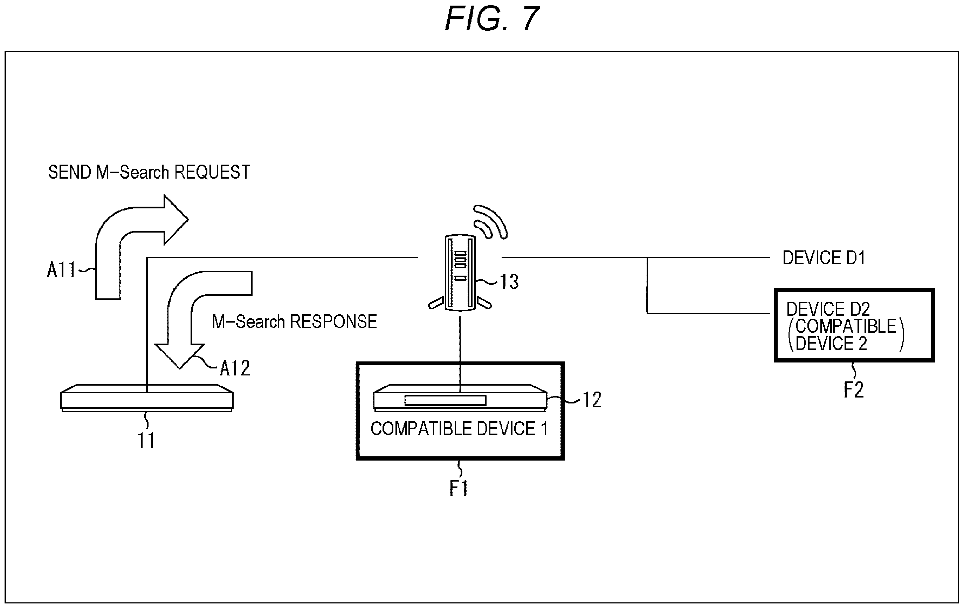

Fig. 7 is a diagram illustrating an example of M-Search performed in step S11.

As pointed by an arrow A11, the STB 11 sends an M-Search request to each device. From each compatible device that is compatible with UPnP and has received the M-Search request, an M-Search response is sent as indicated by an arrow A12.

The STB 11 receives M-Search responses to acquire a list of compatible devices. In the example in Fig. 7, the recorder 12 is denoted as a compatible device 1 and the device D2 is denoted as a compatible device 2, as indicated by enclosing frames F1 and F2.

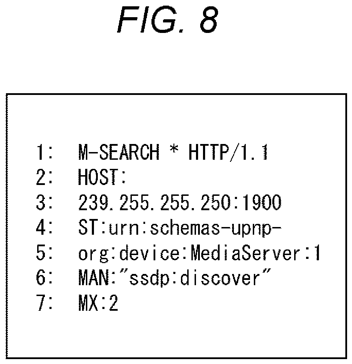

Fig. 8 is a diagram showing an example of the M-Search request.

The M-Search request, which is a device search request, includes the IP address of the STB 11 that has issued the M-Search request, as shown in the 3rd line. In addition, as shown in the 5th line, information indicating that the STB 11 has a MediaServer function is included.

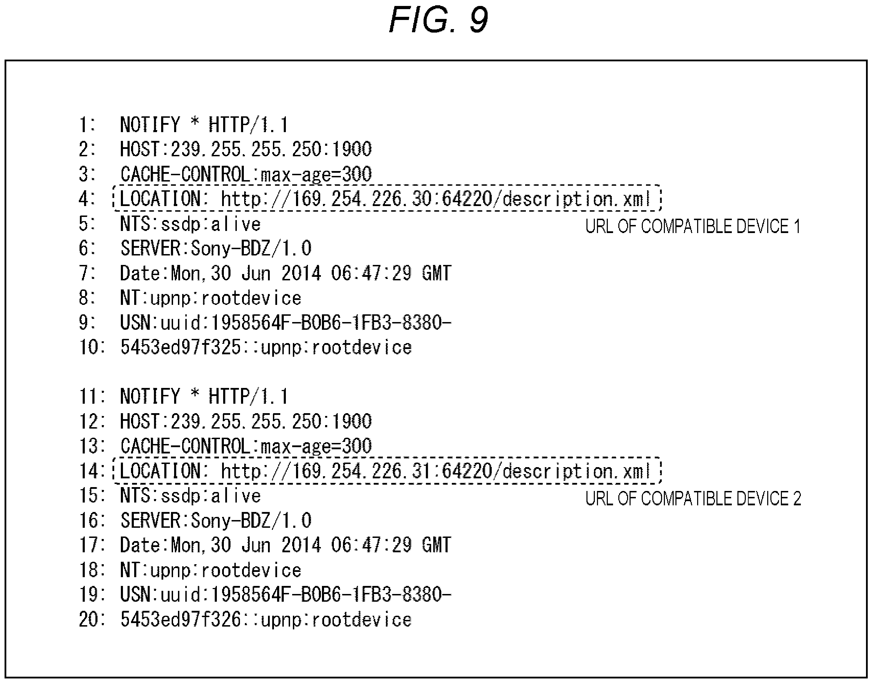

The number shown on the left of each line in Fig. 8 is added for convenience of explanation, and is not part of the description of an M-Search request. The same applies to descriptions in the information pieces in Fig. 9 and subsequent figures. The following describes major elements of a description included in the information sent and received among devices.

Fig. 9 is a diagram showing a list of devices acquired on the basis of M-Search responses.

The description in the 1st to 10th lines is acquired on the basis of the M-Search response sent from the recorder 12, which is the compatible device 1. The description "LOCATION: http://169.254.226.30:64220/description.xml" in the 4th line represents the URL of the compatible device 1.

The description in the 11th to 20th lines is acquired on the basis of the M-Search response sent from the device D2, which is the compatible device 2. The description "LOCATION: http://169.254.226.31:64220/description.xml" in the 14th line represents the URL of the compatible device 2.

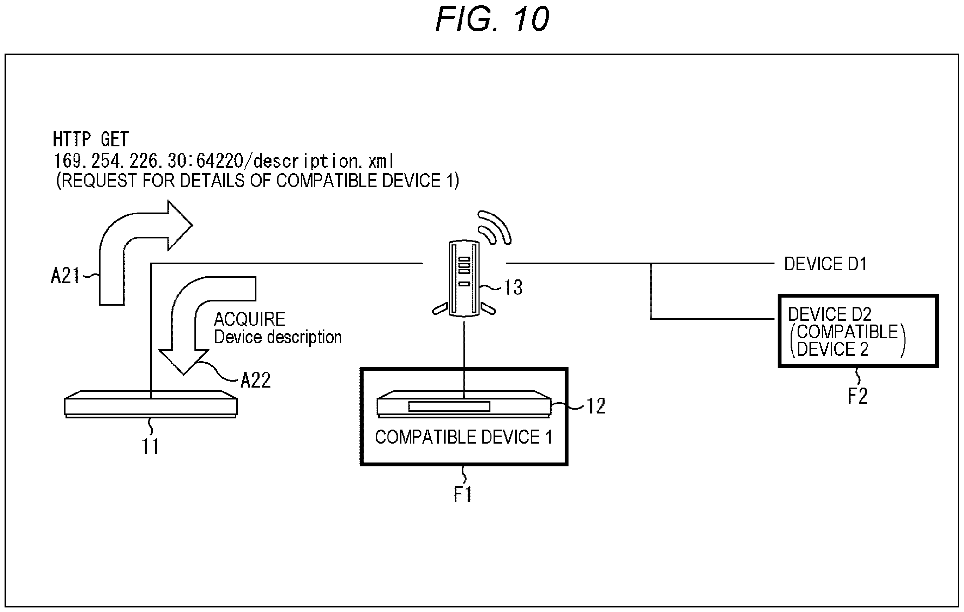

Fig. 10 is a diagram illustrating an example of acquisition of a device description performed in step S12.

As indicated by an arrow A21, the STB 11 sends HTTP GET, which is a request for a device description, to the recorder 12, which is the compatible device 1. The HTTP GET destined for the recorder 12 includes the URL of the recorder 12, the URL being included in the M-Search response. Having received the HTTP GET, the recorder 12 sends a device description as indicated by an arrow A22.

Likewise, the STB 11 sends HTTP GET to the device D2, which is the compatible device 2, and acquires a device description sent from the device D2 that has received the HTTP GET.

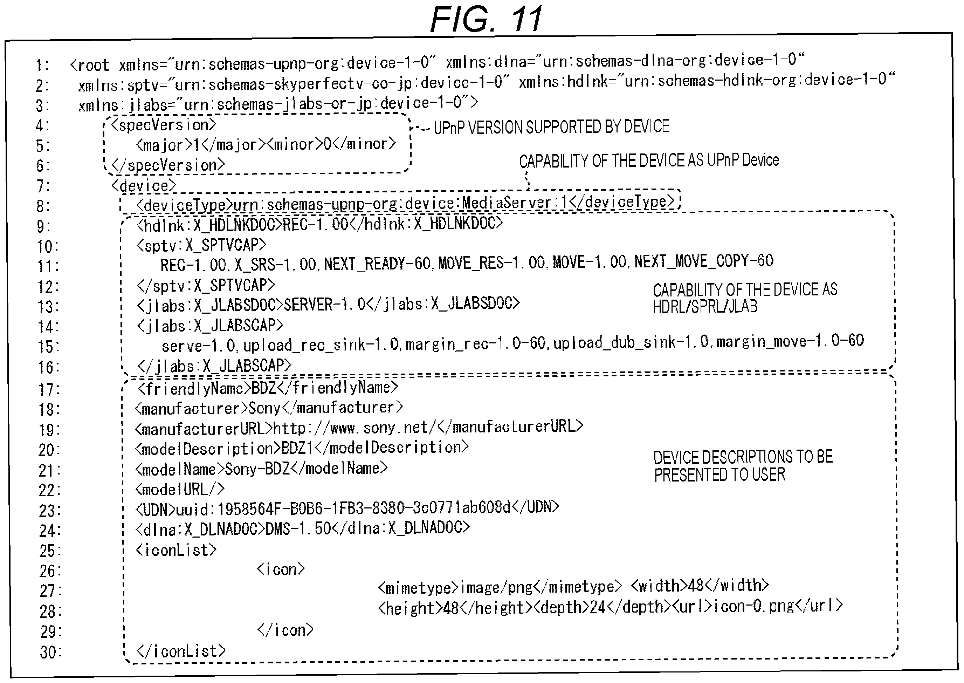

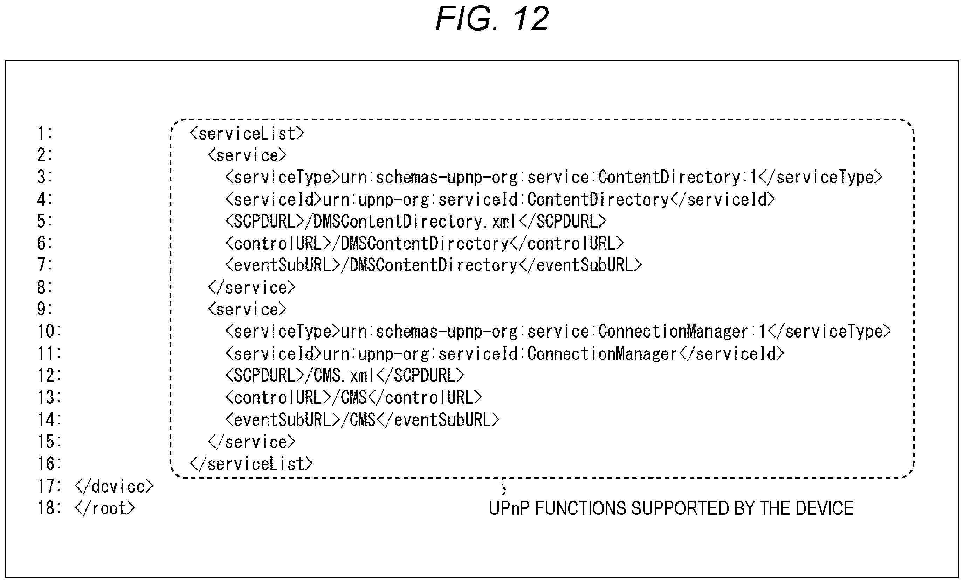

Figs. 11 and 12 are diagrams showing an example of the device description.

The device description in Figs. 11 and 12 is a device description acquired from, for example, the recorder 12.

The description in the 4th to 6th lines in Fig. 11 represents the UPnP version supported by the device, and the description in the 8th line represents the capability of the device as a UPnP device. The description in the 9th to 16th lines represents the capability of the device as HDRL/SPRL/JLAB, and the description in the 17th to 30th lines represents the description of the device to be used for presenting information to the user.

For example, "<friendlyName>BDZ</friendlyName>" in the 17th line indicates that the friendly name of the recorder 12 is "BDZ". The description of the device includes various types of information, including, for example, the manufacturer name (manufacturer), the URL of the manufacturer (manufacturerURL), and the model name (modelDescription).

The description in the 1st to 16th lines in Fig. 12 represents UPnP functions supported by the description of the device. For example, the description in the 2nd to 8th lines indicates that the recorder 12 supports the ContentDirectory function. In addition, the description in the 9th to 15th lines indicates that the recorder 12 supports the Connection Manager Service (CMS) function.

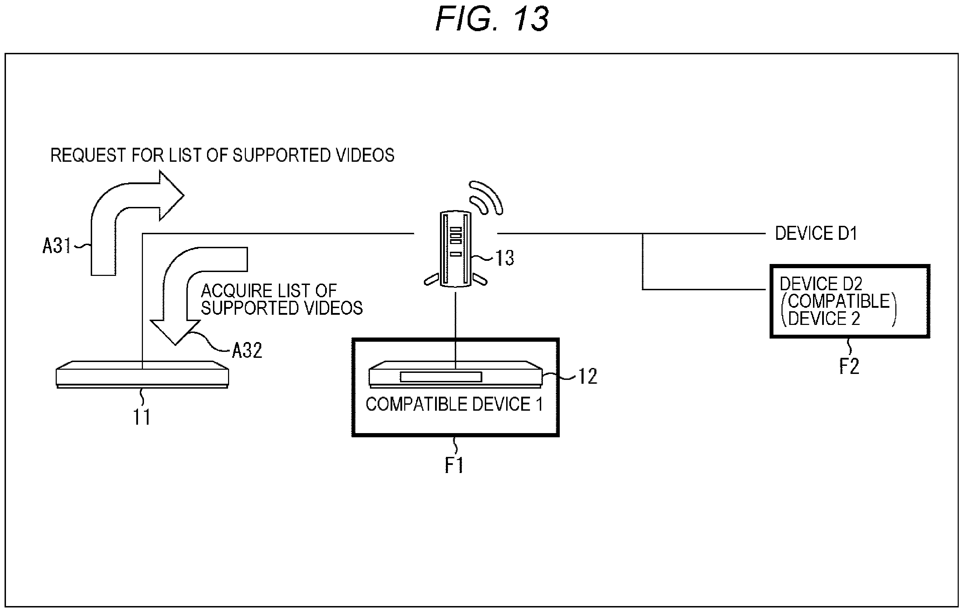

Fig. 13 is a diagram illustrating an example of acquisition of a list of videos supported by the compatible device.

The acquisition of a list of videos supported by the compatible device takes place as appropriate when, for example, the device description has already been acquired but the friendly name is not presented to the user yet.

As indicated by an arrow A31, the STB 11 sends an HTTP request, which is a request for a list of supported videos, to the recorder 12, which is the compatible device 1. Having received the request from the STB 11, the recorder 12 sends an HTTP response containing information representing a list of videos supported by the recorder 12, as indicated by an arrow A32.

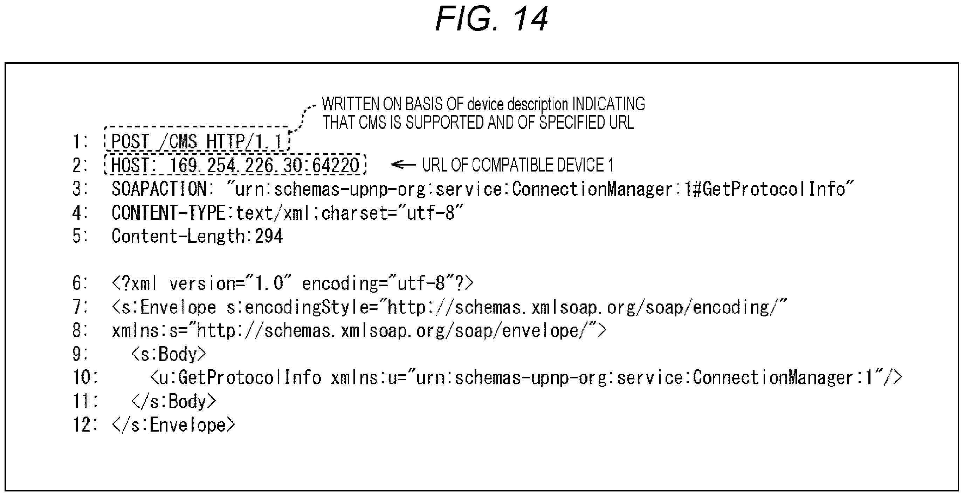

Fig. 14 is a diagram showing an example of an HTTP request making a request for a list of supported videos.

"POST /CMS HTTP/1.1" in the 1st line is set on the basis of the fact that the device description includes a statement that the recorder 12 supports CMS (Fig. 12) and that the URL was specified. "HOST: 169.254.226.30:64220" in the 2nd line represents the URL of the compatible device 1.

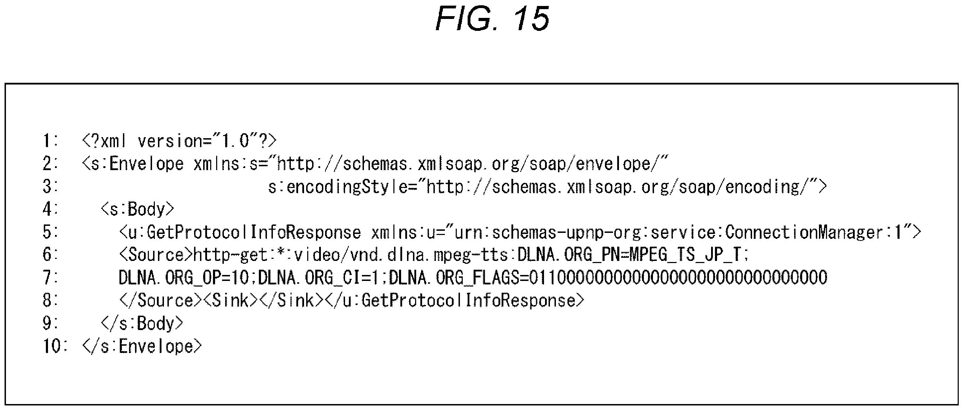

Fig. 15 is a diagram showing an example of an HTTP response that includes information indicating a list of supported videos.

"MPEG_TS_JP_T" in the 6th line indicates that the recorder 12 supports processing of the content up to 2K (HD) resolution based on MPEG-2 TS.

The destination device of upload is selected as described above.

### - Selecting a recording medium

Referring to the flowchart in Fig. 16, the following describes the recording medium selection carried out in step S3 in Fig. 5.

In step S21, the STB 11 performs GetRecordDestinations to acquire RecordDestination from the compatible device selected in the device selection in step S1, such as the recorder 12. RecordDestination contains information regarding a recording medium included in the device.

In step S22, the STB 11 presents friendlyNamedestIDs to the user on the basis of the record destination acquired by performing GetRecordDestinations. Looking at friendlyNamedestIDs displayed on, for example, a TV, the user selects a recording medium on which the content is to be recorded.

When a recording medium is selected, the STB 11 performs in step S23 GetRecordContainerID to acquire ContainerID from the recorder 12. ContainerID is the ID of the recording medium selected by the user. After ContainerID is acquired, the processing returns to step S3 in Fig. 5 to proceed with the process in step S3 and subsequent steps.

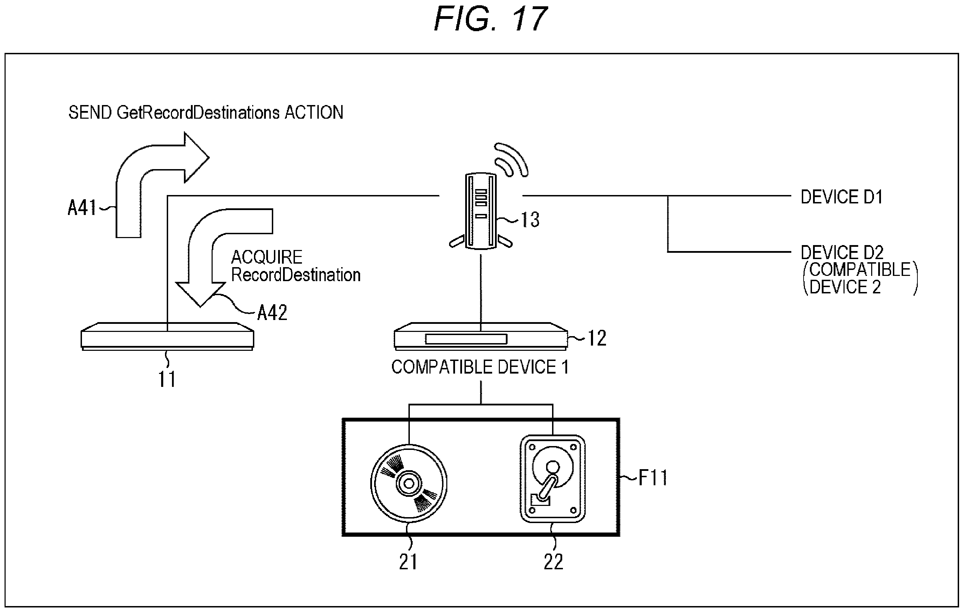

Fig. 17 is a diagram illustrating an example of GetRecordDestinations performed in step S21.

As indicated by an arrow A41, the STB 11 sends a GetRecordDestinations action to the recorder 12. Having received the GetRecordDestinations action, the recorder 12 sends a GetRecordDestinations response as indicated by an arrow A42. The GetRecordDestinations response sent by the recorder 12 includes RecordDestination, which contains information regarding the optical disk 21 and information regarding the HDD 22, as indicated by an enclosing frame F11.

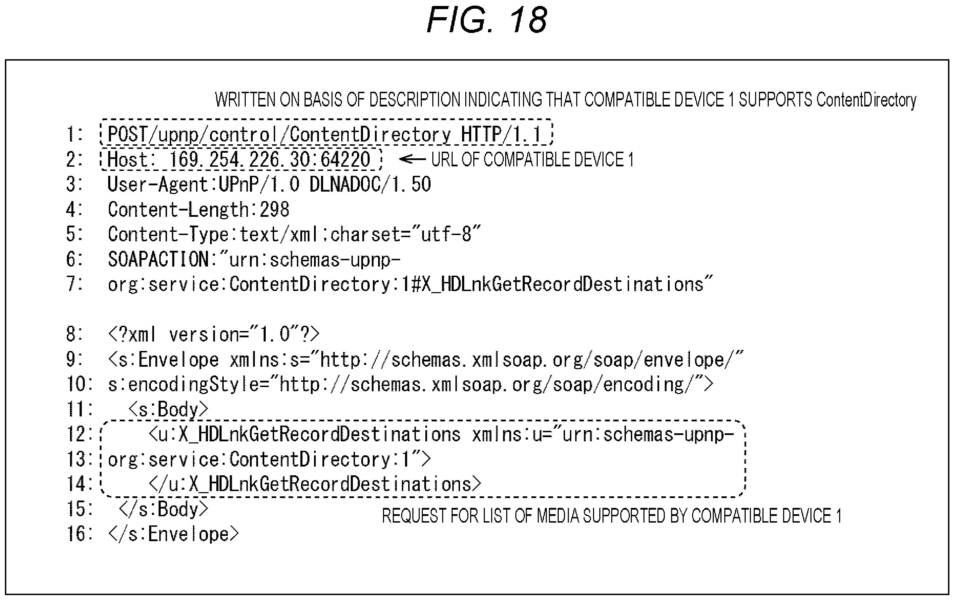

Fig. 18 is a diagram showing an example of the GetRecordDestinations action.

"POST /upnp/control/ContentDirectory HTTP/1.1" in the 1st line is written on the basis of the fact that the compatible device 1 supports ContentDirectory (Fig. 12). "Host: 169.254.226.30:64220" in the 2nd line represents the URL of the compatible device 1. The description in the 12th to 14th lines represents a request for a list of recording media supported by the compatible device 1.

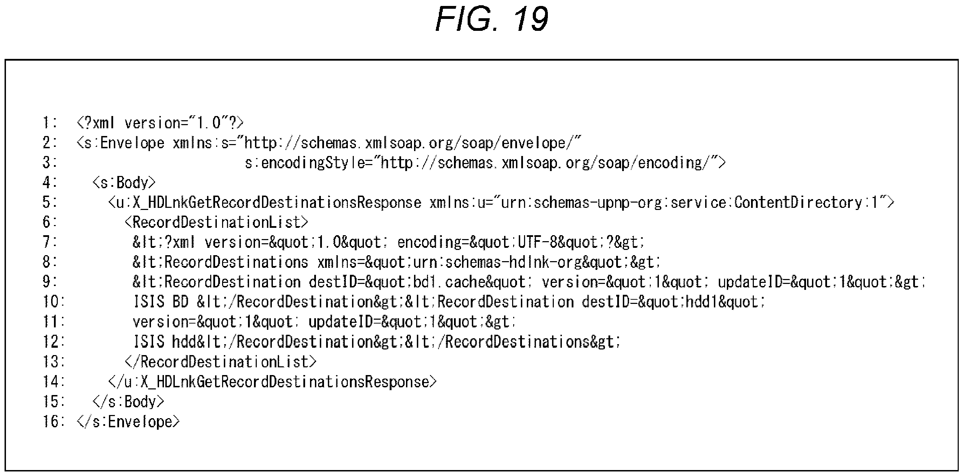

Fig. 19 is a diagram showing an example of the GetRecordDestinations response.

"RecordDestination destID="bd1.cache" in the 9th line and "RecordDestination destID="hdd1" in the 10th line indicate that the recorder 12, which is the compatible device 1, supports recording media "bd1.cache" and "hdd1". The friendly name of "bd1.cache" is "ISIS BD", and the friendly name of "hdd1" is "ISIS hdd".

After RecordDestination is acquired through the GetRecordDestinations response, details of each of the recording media are acquired by using GetRecordDestinationInfo. GetRecordDestinationInfo is appropriately performed at a time, for example, before friendlyNamedestIDs are presented to the user.

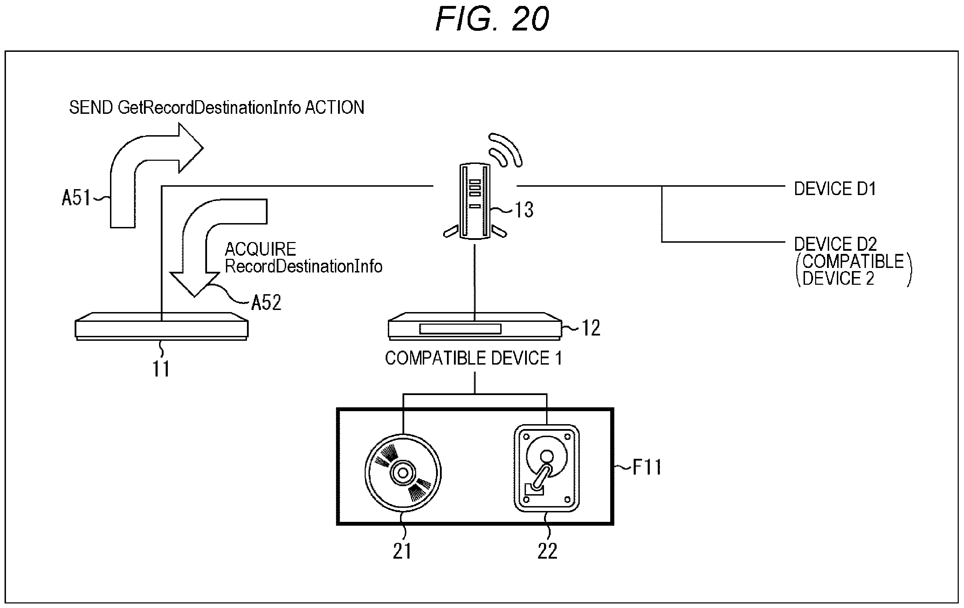

Fig. 20 is a diagram illustrating an example of GetRecordDestinationInfo.

As indicated by an arrow A51, the STB 11 sends a GetRecordDestinationInfo action to the recorder 12. Having received the GetRecordDestinationInfo action, the recorder 12 sends a GetRecordDestinationInfo response as indicated by an arrow A52. The GetRecordDestinationInfo response sent by the recorder 12 includes RecordDestinationInfo, which contains detailed information regarding, for example, the optical disk 21.

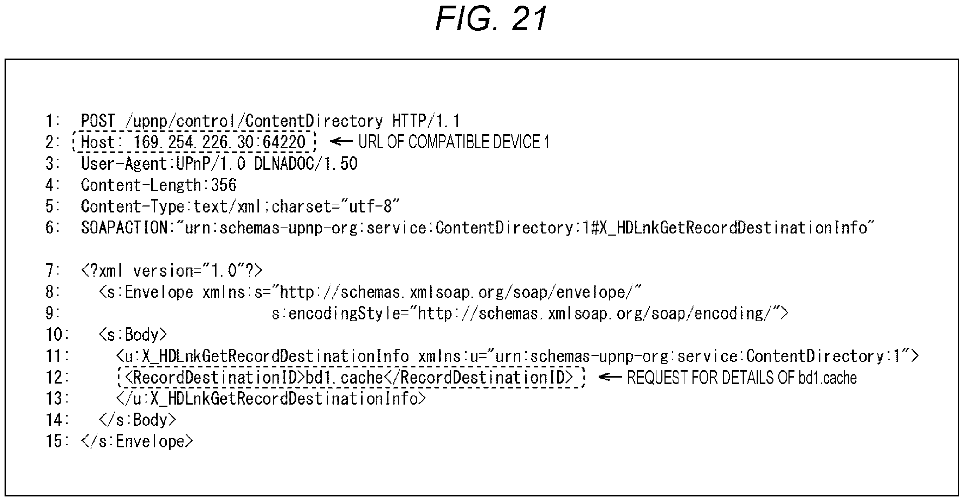

Fig. 21 is a diagram showing an example of the GetRecordDestinationInfo action.

"Host: 169.254.226.30:64220" in the 2nd line represents the URL of the compatible device 1. "RecordDestinationID>bd1.cache</RecordDestinationID>" in the 12th line represents a request for details of bd1. cache.

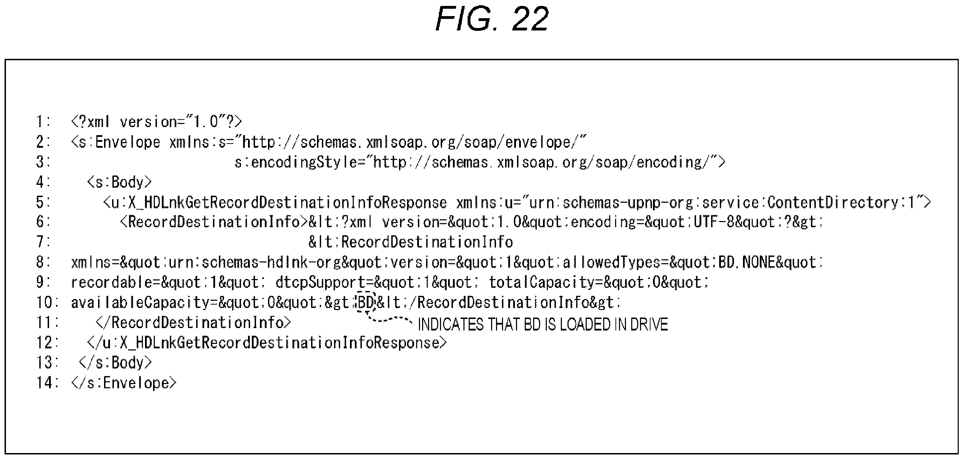

Fig. 22 is a diagram showing an example of the GetRecordDestinationInfo response.

"BD" in the 10th line indicates that a BD is loaded in "bd1.cache", which represents a recording medium.

A similar process is carried out for the HDD 22 to acquire RecordDestinationInfo containing detailed information regarding the HDD 22. The following description assumes that the HDD 22 has been selected as the recording destination of content.

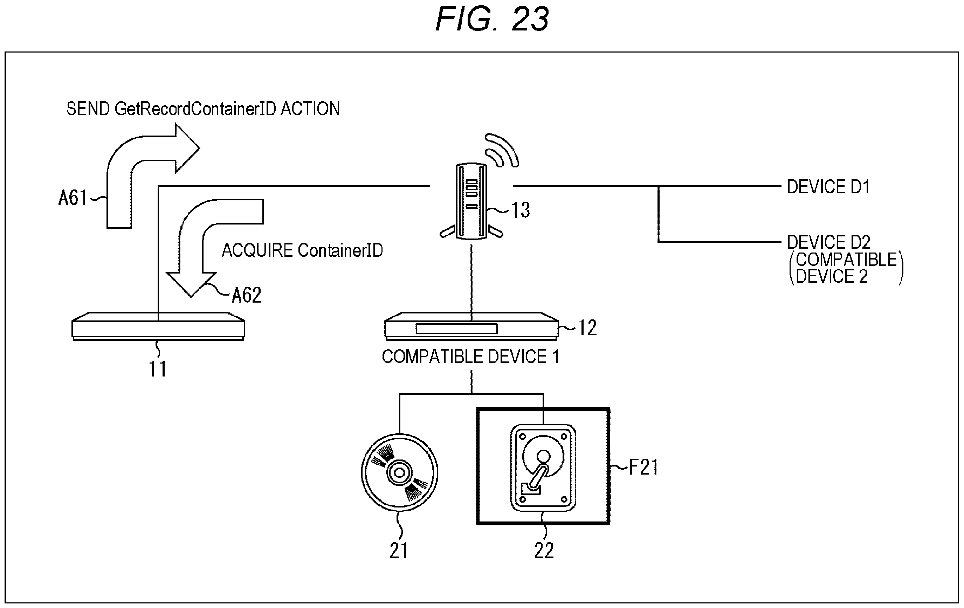

Fig. 23 is a diagram illustrating an example of GetRecordContainerID performed in step S23.

As indicated by an arrow A61, the STB 11 sends a GetRecordContainerID action to the recorder 12. Having received the GetRecordContainerID action, the recorder 12 sends a GetContainerID response as indicated by an arrow A62. The GetContainerID response sent by the recorder 12 includes the ContainerID of the HDD 22 selected by the user as the recording destination, as indicated by an enclosing frame F21. GetContainerID is a process for determining how the recording destination is specified.

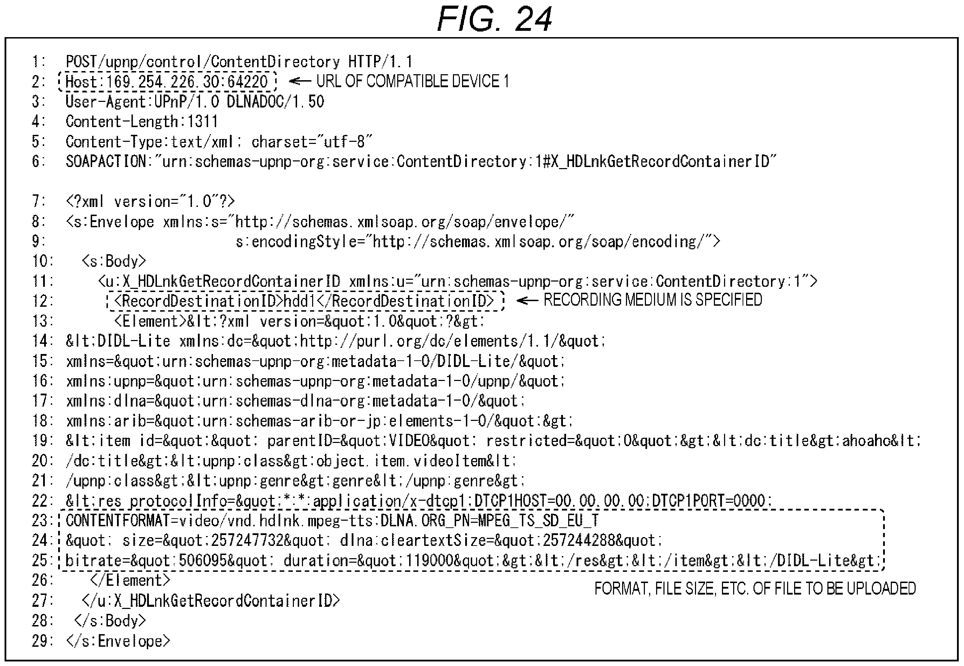

Fig. 24 is a diagram showing an example of the GetRecordContainerID action.

"Host: 169.254.226.30:64220" in the 2nd line represents the URL of the compatible device 1. "<RecordDestinationID>hdd1</RecordDestinationID>" in the 12th line indicates that the HDD 22 is specified as the recording medium. The description in the 23rd to 25th lines represents the format, the file size, and the like of the file to be uploaded.

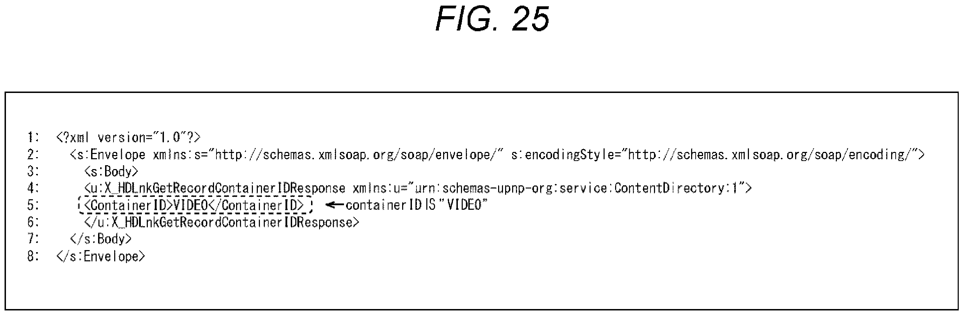

Fig. 25 is a diagram showing an example of the GetRecordContainerID response.

"<ContainerID>VIDEO</ContainerID>" in the 5th line indicates that ContainerID is "VIDEO".

A recording medium is selected as described above.

### - Uploading the content

Referring to the flowchart in Fig. 26, the following describes upload of the content carried out in step S4 in Fig. 5.

In step S31, the STB 11 performs CreateObject with ContainerID specified as an argument to acquire importURI from the recording medium selected in step S3. The importURI represents the destination of the content to be post by using HTTP Post.

In step S32, the STB 11 uploads the content by using HTTP Post with importURI specified as an argument.

In step S33, the STB 11 determines whether or not the upload of the content is finished.

If the STB 11 determines in step S33 that the upload of the content is not finished, the processing returns to step S32 to repeat the upload of the content.

If the STB 11 determines in step S33 that the upload of the content is finished, the STB 11 in step S34 notifies the device of chunkSize=0 by using HTTP Post with importURI specified as an argument. ChunkSize=0 represents that upload of all the data of the content is finished.

When the upload of the content is finished, the processing return to step S4 in Fig. 5 and the series of process steps is ended.

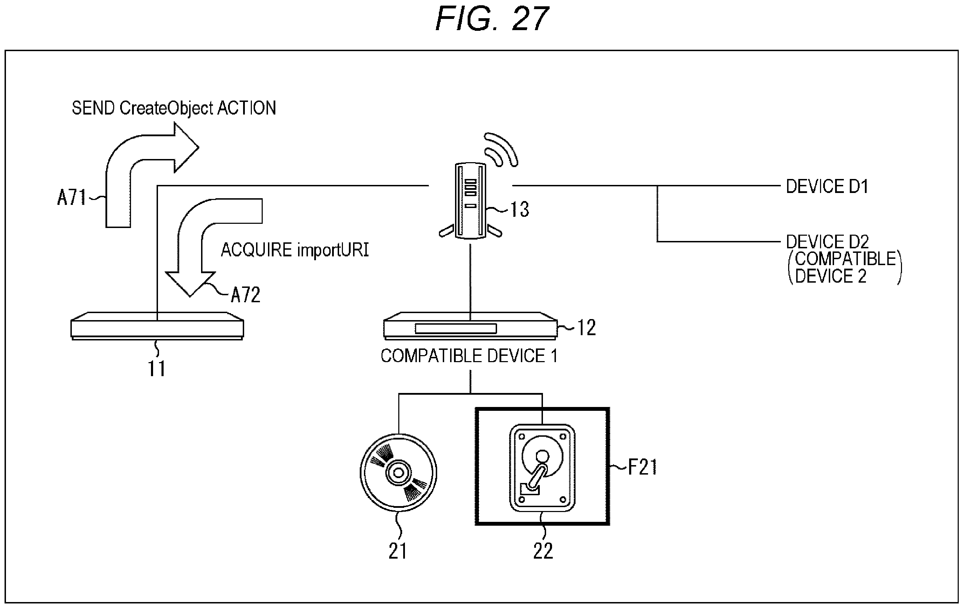

Fig. 27 is a diagram illustrating an example of CreateObject performed in step S31.

As indicated by an arrow A71, the STB 11 sends a CreateObject action to the recorder 12. Having received the CreateObject action, the recorder 12 sends a response containing importURI as indicated by an arrow A72. CreateObject is a process for determining how the destination of post (destination of upload) is specified when the content is uploaded by using HTTP Post.

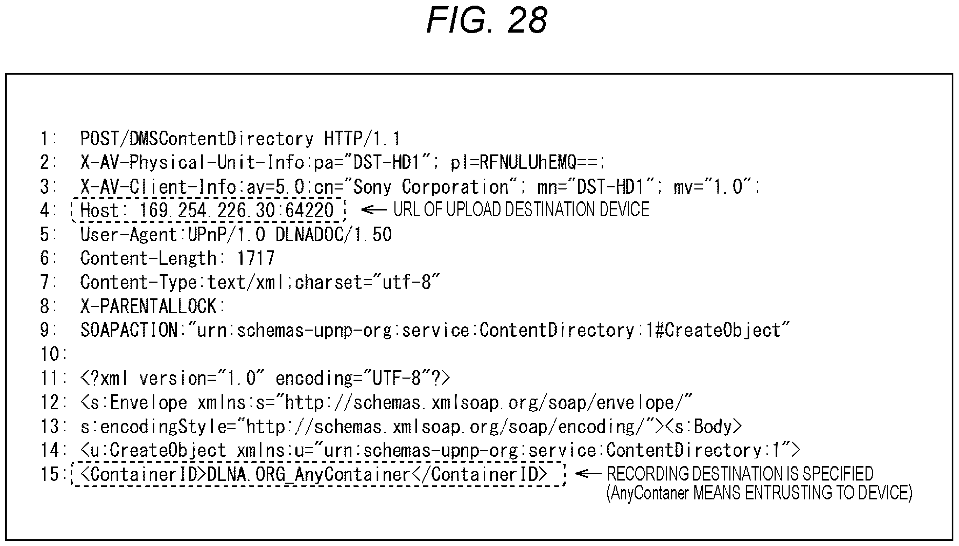

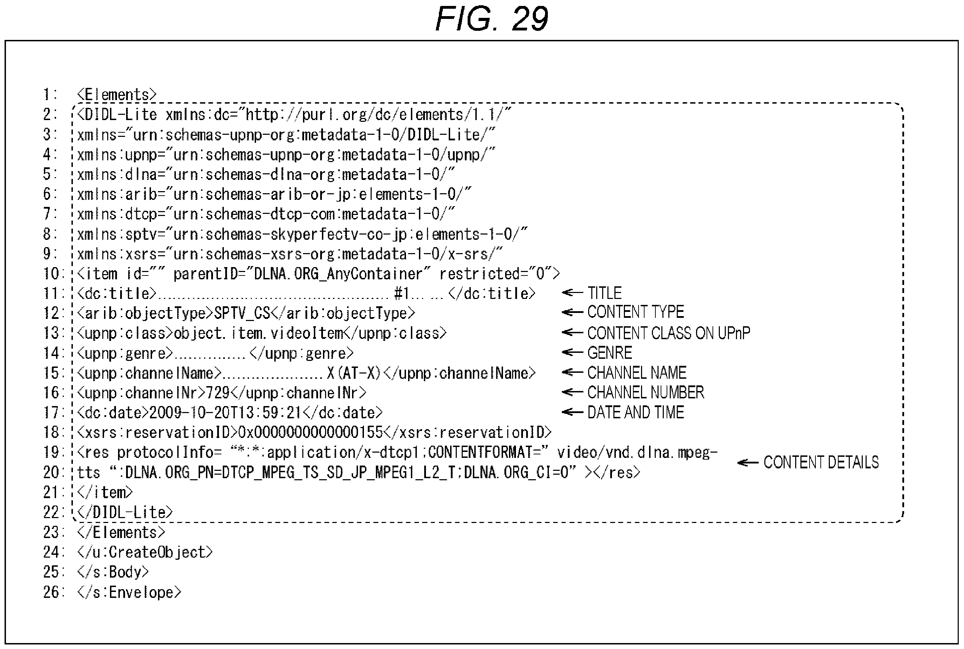

Figs. 28 and 29 are diagrams showing an example of the CreateObject action.

The CreateObject action containing descriptions as shown in Figs. 28 and 29 is sent from the STB 11 to the recorder 12.

"Host:169.254.226.30:64220" in the 4th line in Fig. 28 represents the URL of the recorder 12, which is the destination device of the upload. "<ContainerID>DLNA.ORG_AnyContainer</ContainerID>" in the 15th line indicates ContainerID, that is, the specified destination of the recording. "AnyContainer" as the ContainerID represents that specifying the destination of the recording is entrusted to the device.

The description in the 11th to 20th lines in Fig. 29 represents information regarding the content to be uploaded.

"<dc:title>........................................ ........ #1... ...</dc:title>" in the 11th line represents the title of the content.

"<arib:objectType>SPTV_CS</arib:objectType>" in the 12th line represents the type of the content.

"<upnp:class>object.item.videoItem</upnp:class>" in the 13th line represents the class of the content on UPnP.

"<upnp:genre>...............</upnp:genre>" in the 14th line represents the genre of the content, such as sports.

"<upnp:channelName>.....................X(AT-X)</upnp:channelName>" in the 15th line represents the name of the channel on which the content is broadcast.

"<upnp:channelNr>729</upnp:channelNr>" in the 16th line represents the number of the channel on which the content is broadcast.

"<dc:date>2009-10-20T13:59:21</dc:date>" in the 17th line represents the date and time when the content is broadcast.

The description in the 19th and 20th lines represents details of the content.

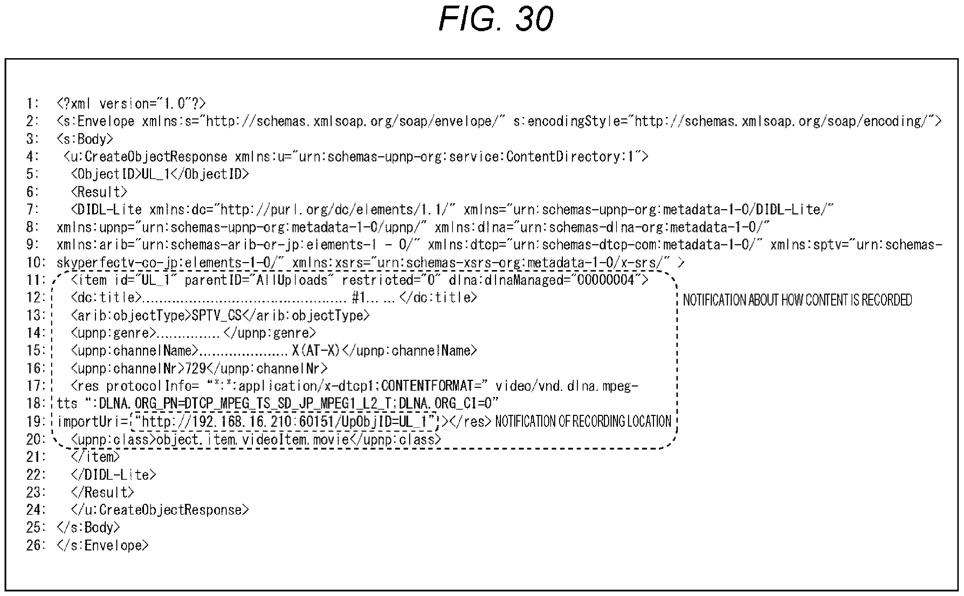

Fig. 30 is a diagram showing an example of a response including importURI.

The description in the 11th to 20th lines is notification about how the content is to be recorded, as given from the recorder 12 to the STB 11. "http://192.168.16.210:60151/UpObjID=UL_1" in the 19th line represents importURI as the recording location.

Having received the CreateObject action, the recorder 12 sends a response containing such descriptions.

After the STB 11 and the recorder 12 hold such various information exchanges, upload of the AV data, which is the actual data of the content, is started by using HTTP Post.

In other words, before starting upload of the content, the STB 11 is required to notify the recorder 12 of the property information, which is the information regarding the content to be uploaded, by performing CreateObject. As described with reference to Fig. 29, a CreateObject action sent by the STB 11 includes, as arguments, the property information representing information regarding the content to be uploaded, such as the title and type of the content.

In addition, in order to perform CreateObject, the STB 11 is required to extract information to be used as the property information from various types of information transmitted along with the content and to manage the extracted information as the information to be included in a CreateObject action.

### <Network system with MMT broadcasting>

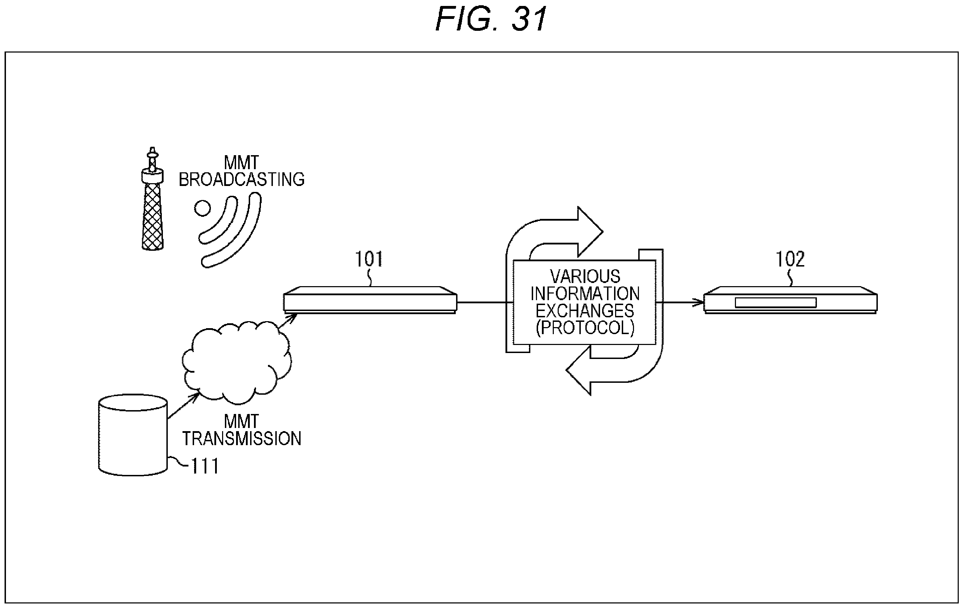

Fig. 31 is a diagram illustrating an example configuration of a network system according to one embodiment of the present technology.

Like the network system in Fig. 4, the network system in Fig. 31 is constructed in the home, for example. The network system in Fig. 31 is configured by connecting, via a network, the STB 101 serving as an information processing device and the recorder 102 serving as an external device.

As described above, the network system in Fig. 31 is also provided with a router that controls communications in the network and with other external devices each capable of serving as a device to which content is uploaded. Duplicate descriptions are omitted if appropriate.

In the network system in Fig. 31, content that is broadcast by MMT broadcasting, such as 4K/8K content, is the target of processing. MMT broadcasting is the broadcasting that uses MPEG Media Transport (MMT) as a content transmission scheme.

The 4K/8K content transmitted by using MMT from a server 111 via the Internet may also be processed in the network system in Fig. 31.

That is, any transmission path may be used as long as the content is transmitted by using MMT. For example, the MMT content that has been transmitted through, as a transmission path, terrestrial waves, broadcast waves, cable television networks, or communication networks is processed in the network system in Fig. 31.

The following mainly describes processing of the content that is transmitted by MMT broadcasting. Any content that is transmitted through other transmission paths is processed in a similar manner.

The STB 101 receives the 4K/8K content that has been transmitted by MMT broadcasting. Various information exchanges as described above are held between the STB 101 and an external device on the network in accordance with a predetermined protocol.

After various information exchanges are held between the STB 101 and the external device, the 4K/8K content is subjected to the moving over the network in use case 1 (Fig. 1), the saving of content in use case 2 (Fig. 2), and the streaming viewing in use case 3 (Fig. 3) .

The moving over a network in use case 1 takes place between, for example, the STB 101 and the recorder 102 as an external device. The STB 101 receives the 4K/8K content that has been broadcast, uploads the content to the recorder 102 via a network, and causes an HDD built in the recorder 102 to record the content.

The saving of content in use case 2 takes place between, for example, the STB 101 having an external HDD connected thereto and the recorder 102 as an external device. The STB 101 uploads the 4K/8K content that was once recorded on the external HDD to the recorder 102 via a network, and causes an optical disk loaded in the recorder 102 to record the content.

The streaming viewing in use case 3 takes place between, for example, the STB 101 having an external HDD connected thereto and a mobile terminal (not illustrated) as an external device. The STB 101 uploads the 4K/8K content that was once recorded on the external HDD to the mobile terminal via a network to allow the content to be viewed on the mobile terminal by streaming the content.

In any one of use case 1, use case 2, and use case 3, before starting upload of the 4K/8K content, the STB 101 is required to notify the external device of the property information, which is the information regarding the content to be uploaded, by performing CreateObject.

In addition, in order to perform CreateObject, the STB 101 is required to extract information to be used as the property information from various types of information transmitted along with the 4K/8K content and to include the extracted information in a CreateObject action.

The STB 101 has a function of extracting information to be used as the property information from the control information transmitted by MMT broadcasting and performing CreateObject.

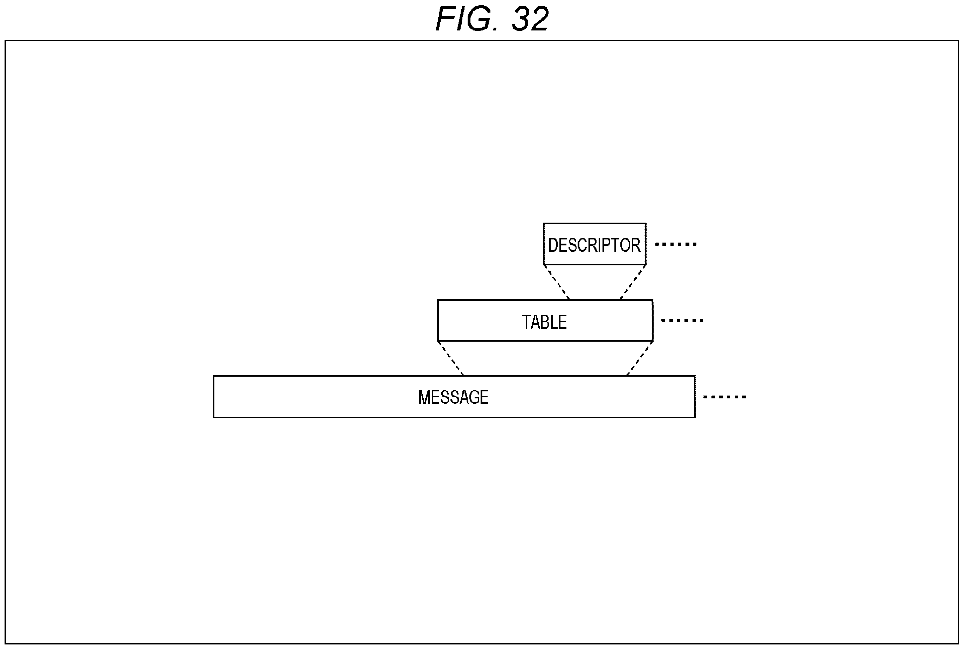

Fig. 32 is a diagram illustrating a structure of MMT-SI, which is control information for MMT broadcasting.

As illustrated in Fig. 32, MMT-SI, which indicates information pertaining to the configuration of an MMT package and broadcasting services, includes three-layer information: a message containing tables and descriptors, a table having elements and attributes representing specific information, and a descriptor representing detailed information.

A message is contained in an MMTP payload and transmitted by using an MMTP packet. The value of payload_type is 0x02 when a message is included in an MMTP payload. One message is contained in one MMTP payload.

The STB 101 refers to a description in at least one of a message (control message), tables, or descriptors included in such MMT-SI to extract information to be used as the property information.

Furthermore, if appropriate, the STB 101 refers to data in a type length value (TLV) packet depending on the type of the property information to extract information to be used as the property information. A TLV packet is a packet used for transmitting an MMTP packet.

### <Examples of property information>

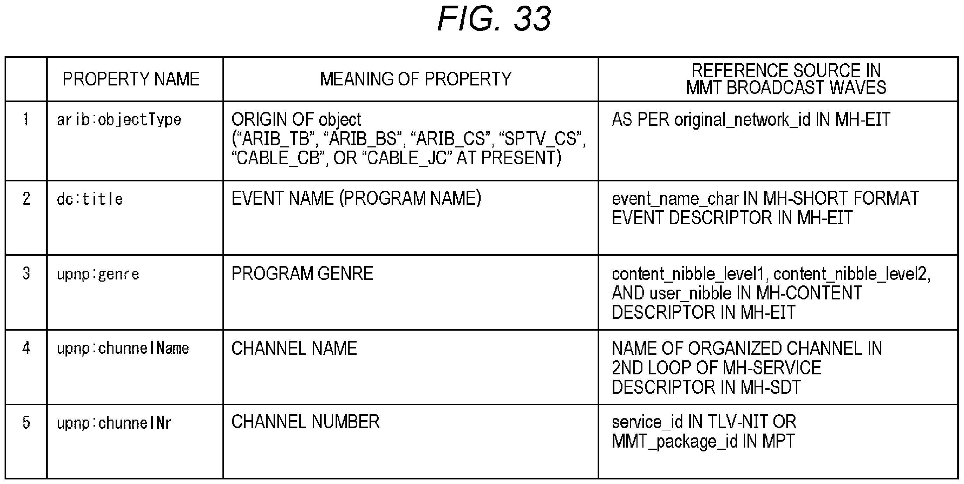

Figs. 33 to 37 are diagrams showing examples of property information.

For example, 25 types of property information pieces shown in Figs. 33 to 37 are extracted from MMT broadcast waves (MMT broadcast signals) by the STB 101 and used for CreateObject.

In Figs. 33 to 37, the leftmost numbers represent property information numbers. For convenience of explanation, each piece of property information will be described by using the assigned number as appropriate. For example, the "property information P1" represents the property information to which the number "1" is assigned. The same applies to other pieces of property information to which other numbers are assigned.

In Figs. 33 to 37, the property name, the meaning, and the reference source in MMT broadcast waves are shown for each piece of property information to which a number is assigned. The reference source in MMT broadcast waves represents the reference source to be used for extracting information as the property information.

### - Property information P1

Property information P1 is the property information having a property name of "arib:objectType".

The property information P1 represents the origin of object. The reference source of the property information P1 is original_network_id in MH-EIT, which is an MMT-SI table.

### - Property information P2

Property information P2 is the property information having a property name of "dc:title".

The property information P2 represents an event name (program name). The reference source of the property information P2 is event_name_char in the MH-short format event descriptor in MH-EIT.

### - Property information P3

Property information P3 is the property information having a property name of "upnp:genre".

The property information P3 represents a program genre. The reference source of the property information P3 is content_nibble_level1, content_nibble_level2, and user_nibble in the MH-content descriptor in MH-EIT. A program genre is represented by a combination of content_nibble_level1, content_nibble_level2, and user_nibble.

### - Property information P4

Property information P4 is the property information having a property name of "upnp:chunnelName".

The property information P4 represents a channel name. The reference source of the property information P4 is char (name of organized channel) in the second loop of the MH-service descriptor in MH-SDT.

### - Property information P5

Property information P5 is the property information having a property name of "upnp:chunnelNr".

The property information P5 represents a channel number. The reference source of the property information P5 is service_id in TLV-NIT or MMT_package_id in MPT.

### - Property information P6

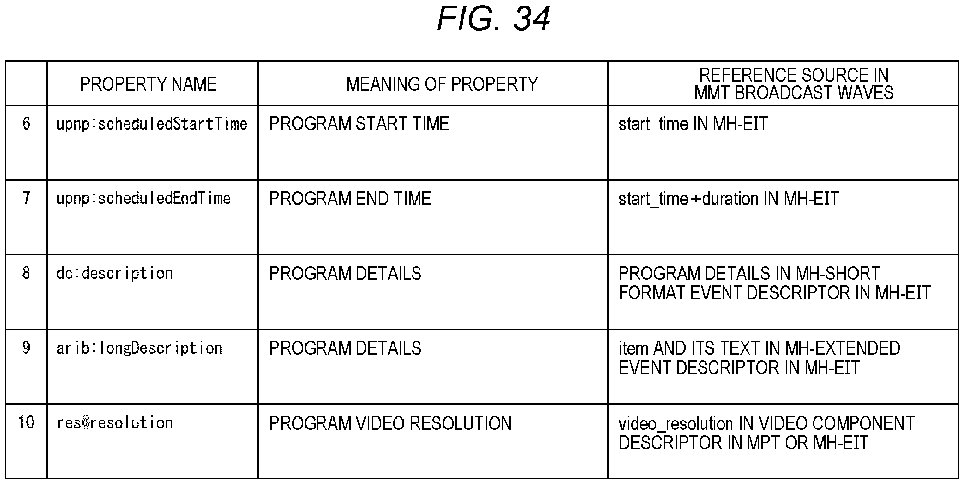

Property information P6 in Fig. 34 is the property information having a property name of "upnp:scheduledStartTime".

The property information P6 represents a program start time. The reference source of the property information P6 is start_time in MH-EIT.

### - Property information P7

Property information P7 is the property information having a property name of "upnp:scheduledEndTime".

The property information P7 represents a program end time. The reference source of the property information P7 is start_time and duration in MH-EIT. How the program end time is obtained on the basis of start_time and duration in MH-EIT will be described later.

### - Property information P8

Property information P8 is the property information having a property name of "dc:description".

The property information P8 represents detailed information about a program. The reference source of the property information P8 is text_char, which represents details of a program in the MH-short format event descriptor in MH-EIT.

### - Property information P9

Property information P9 is the property information having a property name of "arib:longDescription".

The property information P9 represents detailed information about a program. The reference source of the property information P9 is item and its text in the MH-extended event descriptor in MH-EIT.

### - Property information P10

Property information P10 is the property information having a property name of "res@resolution".

The property information P10 represents a video resolution of a program. The reference source of the property information P10 is video_resolution in the video component descriptor in MPT or MH-EIT.

### - Property information P11

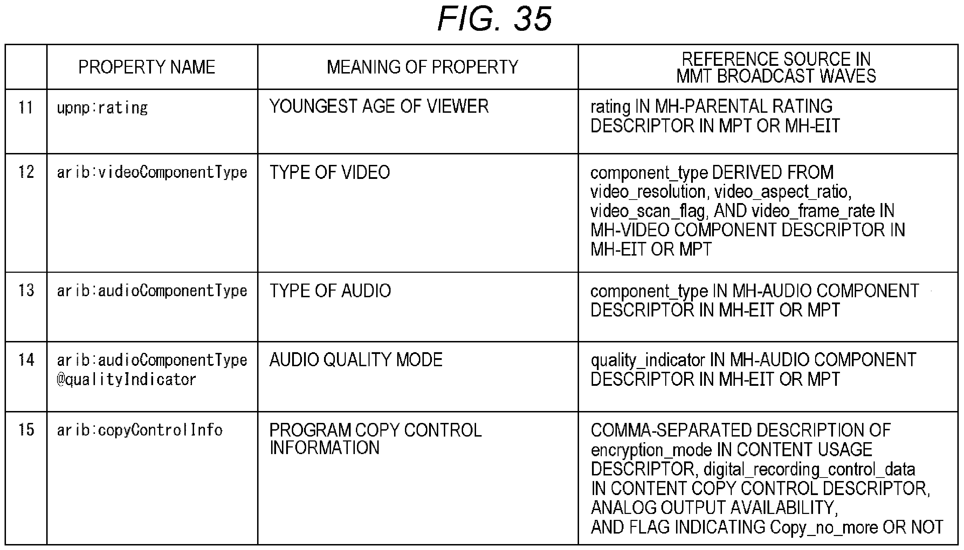

Property information P11 in Fig. 35 is the property information having a property name of "upnp:rating".

The property information P11 represents the youngest age of viewer. The reference source of the property information P11 is rating in the MH-parental rating descriptor in MPT or MH-EIT.

### - Property information P12

Property information P12 is the property information having a property name of "arib:videoComponentType".

The property information P12 represents the type of video. The reference source of the property information P12 is component_type derived from video_resolution, video_aspect_ratio, video_scan_flag, and video_frame_rate in the MH-video component descriptor in MH-EIT or MPT.

### - Property information P13

Property information P13 is the property information having a property name of "arib:audioComponentType".

The property information P13 represents the type of audio. The reference source of the property information P13 is component_type in the MH-audio component descriptor in MH-EIT or MPT.

### - Property information P14

Property information P14 is the property information having a property name of "arib:audioComponentType@qualityIndicator".

The property information P14 represents the audio quality mode. The reference source of the property information P14 is quality_indicator in the MH-audio component descriptor in MH-EIT or MPT.

### - Property information P15

Property information P15 is the property information having a property name of "arib:copyControlInfo".

The property information P15 represents information regarding program copy control. The reference source of the property information P15 is the content usage descriptor and the content copy control descriptor. As the property information P15, a comma-separated description of encryption_mode in the content usage descriptor, digital_recording_control_data in the content copy control descriptor, analog output availability, and a flag indicating Copy_no_more or not is used.

### - Property information P16

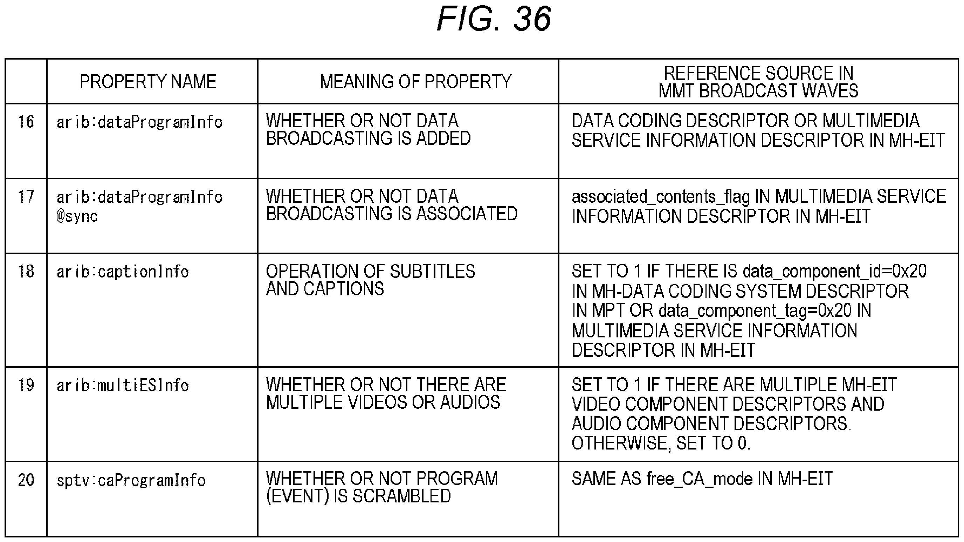

Property information P16 in Fig. 36 is the property information having a property name of "arib:dataProgramInfo".

The property information P16 indicates whether or not data broadcasting is added. The reference source of the property information P16 is the MH-data coding descriptor in MPT or the multimedia service information descriptor in MH-EIT.

### - Property information P17

Property information P17 is the property information having a property name of "arib:dataProgramInfo@sync".

The property information P17 indicates whether or not the program is associated with data broadcasting. The reference source of the property information P17 is associated_contents_flag in the multimedia service information descriptor in MH-EIT.

### - Property information P18

Property information P18 is the property information having a property name of "arib:captionInfo".

The property information P18 represents operation of subtitles and captions. The reference source of the property information P18 is data_component_id in the MH-data coding system descriptor in MPT and data_component_id in the multimedia service information descriptor in MH-EIT.

If the value of data_component_id in the MH-data coding system descriptor in MPT is 0x20, or if the value of data_component_id in the multimedia service information descriptor in MH-EIT is 0x20, the property information P18 is set to a value of 1. Otherwise, the property information P18 is set to a value of 0.

### - Property information P19

Property information P19 is the property information having a property name of "arib:multiESInfo".

The property information P19 indicates whether or not there is a plurality of videos or audios. The reference source of the property information P19 is the video component descriptor and the audio component descriptor in MH-EIT.

If there is a plurality of MH-EIT video component descriptors and audio component descriptors, the property information P19 is set to a value of 1. Otherwise, the property information P19 is set to a value of 0.

### - Property information P20

Property information P20 is the property information having a property name of "sptv:caProgramInfo".

The property information P20 indicates whether or not the program is scrambled. The reference source of the property information P20 is free_CA_mode in MH-EIT.

### - Property information P21

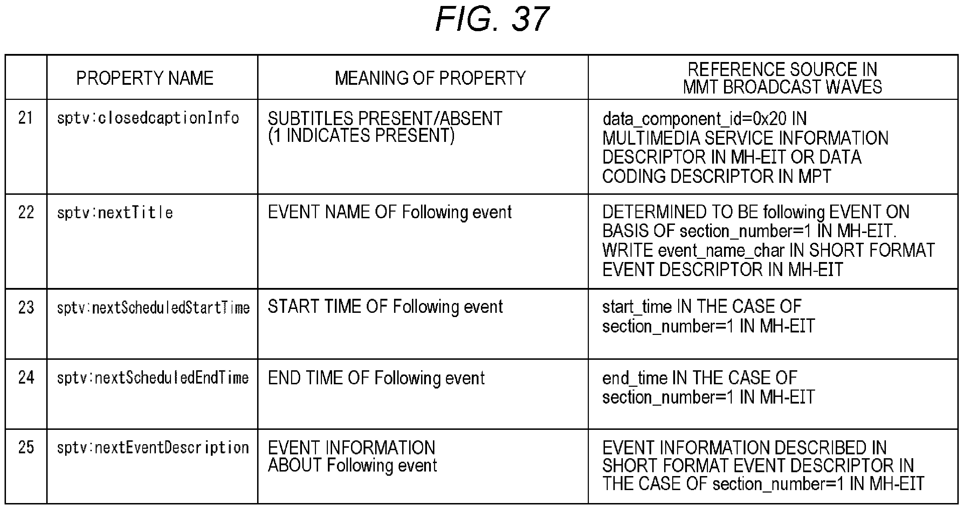

Property information P21 in Fig. 37 is the property information having a property name of "sptv:closedcaptionInfo".

The property information P21 indicates presence/absence of subtitles. If subtitles are present, the property information P21 is set to a value of 1. The reference source of the property information P21 is data_component_id in the multimedia service information descriptor in MH-EIT or data_component_id in the MH-data coding descriptor in MPT. A value of 0x20 assigned to data_component_id indicates that subtitles are present.

### - Property information P22

Property information P22 is the property information having a property name of "sptv:nextTitle".

The property information P22 represents an event name of following event, which is the following program. The reference source of the property information P22 is section_number in MH-EIT and event_name_char in the short format event descriptor in MH-EIT. Section_number in MH-EIT being set to 1 is regarded as indicating a following event, and the property information P22 is set to event_name_char in the short-format event descriptor in MH-EIT.

### - Property information P23

Property information P23 is the property information having a property name of "sptv:nextScheduledStartTime".

The property information P23 represents a start time of the following event. The reference source of the property information P23 is section_number and start_time in MH-EIT. If section_number in MH-EIT is 1, the property information P23 is set to start_time.

### - Property information P24

Property information P24 is the property information having a property name of "sptv:nextScheduledEndTime".

The property information P24 represents an end time of the following event. The reference source of the property information P24 is section_number and end_time in MH-EIT. If section_number in MH-EIT is 1, the property information P24 is set to end_time.

### - Property information P25

Property information P25 is the property information having a property name of "sptv:nextEventDescription".

The property information P25 represents event information regarding the following event. The reference source of the property information P25 is section_number in MH-EIT. If section_number in MH-EIT is 1, the property information P25 is set to text_char, which represents event information in the short format event descriptor.

### <Specific examples of reference for property information>

The following describes specific examples of reference for various types of property information. As described above, reference sources of the property information include tables transmitted by MMTP packets, namely MH-EIT (MH-Event_Information_Table), MH-SDT (MH-Service Description Table), MPT (MMT Package Table), and NIT, which is TLV service information (SI).

### - Property information referencing MH-EIT

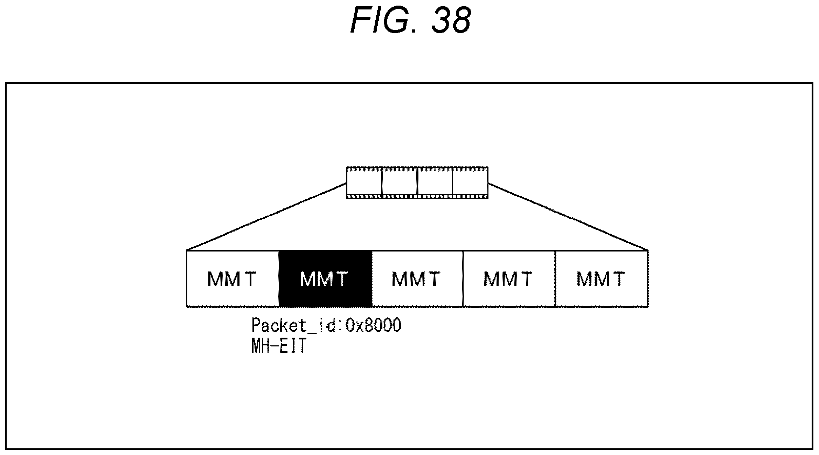

Fig. 38 is a diagram illustrating an example of MMT transmission data.

The MMT transmission data received by the STB 101 includes a sequence of MMTP packets. The header of an MMTP packet includes packet_id, which indicates the type of data contained in the payload.

As shown in Fig. 38, if the value of Packet_id is 0x8000, MH-EIT is contained in the payload.

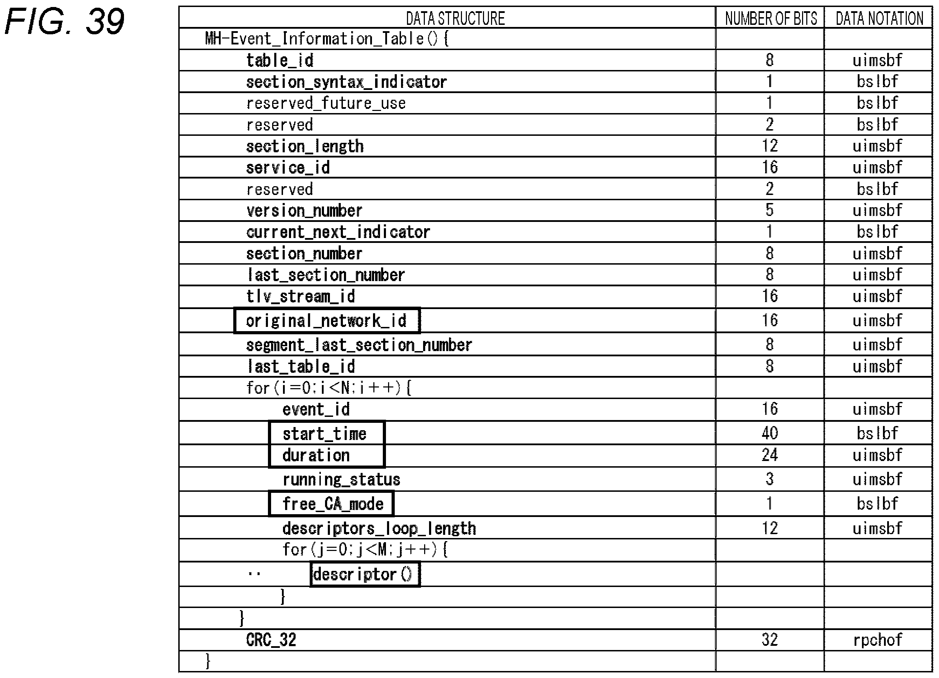

Fig. 39 is a diagram showing the syntax of MH-EIT.

Major descriptions are described below. The same applies to the other syntaxes described later.

As indicated by enclosing frames, MH-EIT includes original_network_id, start_time, duration, free_CA_mode, and descriptor(). Various descriptors are included in descriptor().

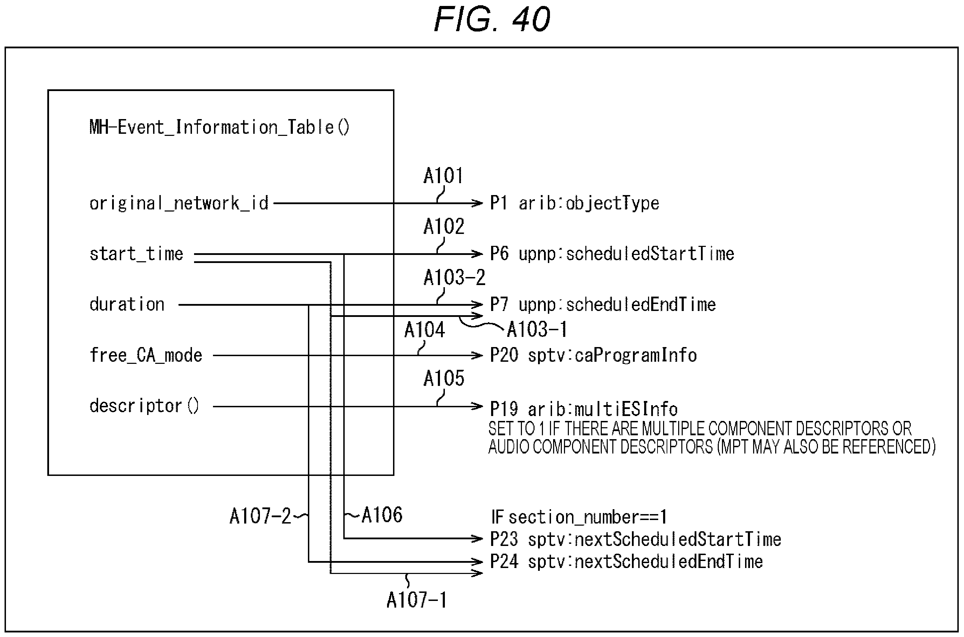

Among these descriptions, original_network_id is the reference source of the property information P1 "arib:objectType". As indicated by an arrow A101 in Fig. 40, the STB 101 extracts the value of original_network_id and stores the value in a memory in the STB 101 as the property information P1 to be used for CreateObject.

start_time is the reference source of the property information P6 "upnp:scheduledStartTime". As indicated by an arrow A102, the STB 101 extracts the value of start_time and stores the value in a memory in the STB 101 as the property information P6 to be used for CreateObject.

start_time and duration are the reference sources of the property information P7 "upnp:scheduledEndTime". As indicated by arrows A103-1 and A103-2, the STB 101 extracts the value of each of start_time and duration. The STB 101 stores the time obtained by adding the time period represented by duration to the time represented by start_time in a memory in the STB 101 as the property information P7 to be used for CreateObject.

free_CA_mode is the reference source of the property information P20 "sptv:caProgramInfo". As indicated by an arrow A104, the STB 101 extracts the value of free_CA_mode and stores the value in a memory in the STB 101 as the property information P20 to be used for CreateObject.

descriptor() is the reference source of the property information P19 "arib:multiESInfo". If there is a plurality of component descriptors or audio component descriptors in descriptor(), the STB 101 sets the property information P19 "arib:multiESInfo" to a value of 1, as indicated by an arrow A105. The STB 101 stores the property information P19 set to a value of 1 in a memory in the STB 101 as the information to be used for CreateObject. Note that the property information P19 may also be set to a value with reference to a description in MPT.

If the value of section_number in MH-EIT (Fig. 39) is 1, start_time is the reference source of the property information P23 "sptv:nextScheduledStartTime". As indicated by an arrow A106, the STB 101 extracts the value of start_time and stores the value in a memory in the STB 101 as the property information P23 to be used for CreateObject.

In addition, if the value of section_number in MH-EIT is 1, start_time and duration are the reference sources of the property information P24 "sptv:nextScheduledEndTime". As indicated by arrows A107-1 and A107-2, the STB 101 extracts the value of each of start_time and duration. The STB 101 stores the time obtained by adding the time period represented by duration to the time represented by start_time in a memory in the STB 101 as the property information P24 to be used for CreateObject.

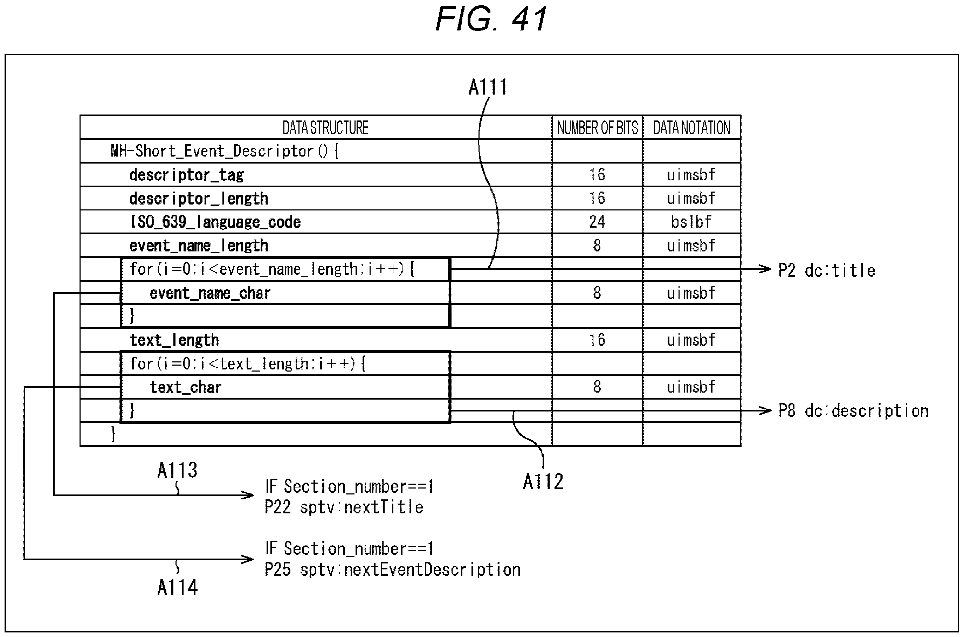

Fig. 41 is a diagram showing the syntax of MH-Short_Event_Descriptor().

MH-Short_Event_Descriptor() is written in descriptor() in MH-EIT.

As indicated by enclosing frames, MH-Short_Event_Descriptor() includes event_name_char and text_char.

Among these descriptions, event_name_char is the reference source of the property information P2 "dc:title". As indicated by an arrow A111, the STB 101 extracts the value of event_name_char and stores the value in a memory in the STB 101 as the property information P2 to be used for CreateObject.

Text_char is the reference source of the property information P8 "dc:description". As indicated by an arrow A112, the STB 101 extracts the value of text_char and stores the value in a memory in the STB 101 as the property information P8 to be used for CreateObject.

If the value of section_number in MH-EIT (Fig. 39) is 1, event_name_char is the reference source of the property information P22 "sptv:nextTitle". As indicated by an arrow 113, the STB 101 extracts the value of event_name_char and stores the value in a memory in the STB 101 as the property information P22 to be used for CreateObject.

In addition, if the value of section_number in MH-EIT is 1, text_char is the reference source of the property information P25 "sptv:nextEventDescription". As indicated by an arrow 114, the STB 101 extracts the value of text_char and stores the value in a memory in the STB 101 as the property information P25 to be used for CreateObject.

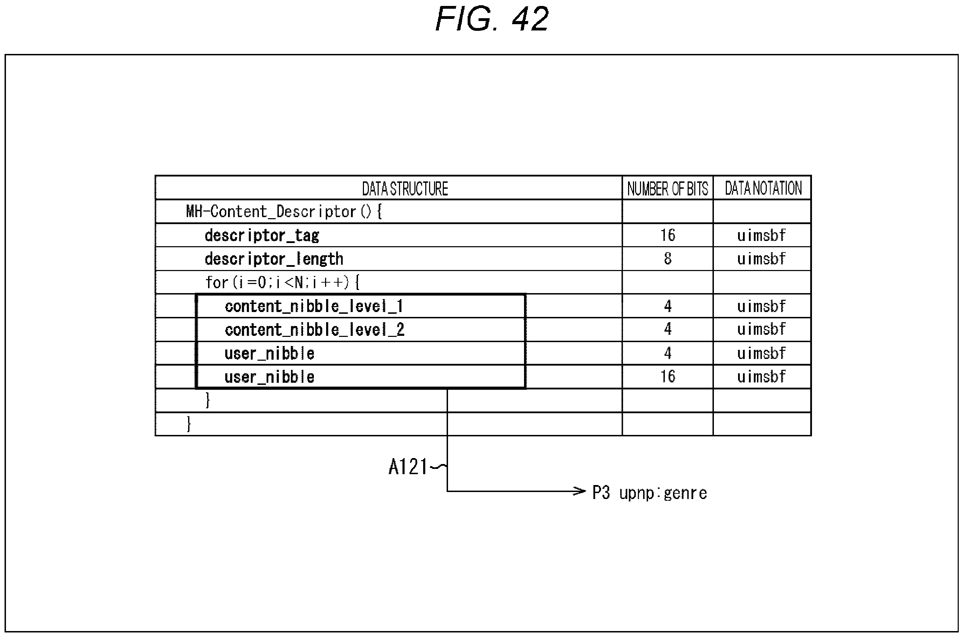

Fig. 42 is a diagram showing the syntax of MH-Content_Descriptor().

MH-Content_Descriptor() is written in descriptor() in MH-EIT.

As indicated by an enclosing frame, MH-Content_Descriptor() includes content_nibble_level_1, content_nibble_level_2, user_nibble (4 bits), and user_nibble (16 bits).

These descriptions are the reference sources of the property information P3 "upnp:genre". As indicated by an arrow A121, the STB 101 extracts the values of content_nibble_level_1, content_nibble_level_2, user_nibble (4 bits), and user_nibble (16 bits). The STB 101 stores information regarding the program genre represented by a combination of the four extracted values in a memory in the STB 101 as the property information P3 to be used for CreateObject.

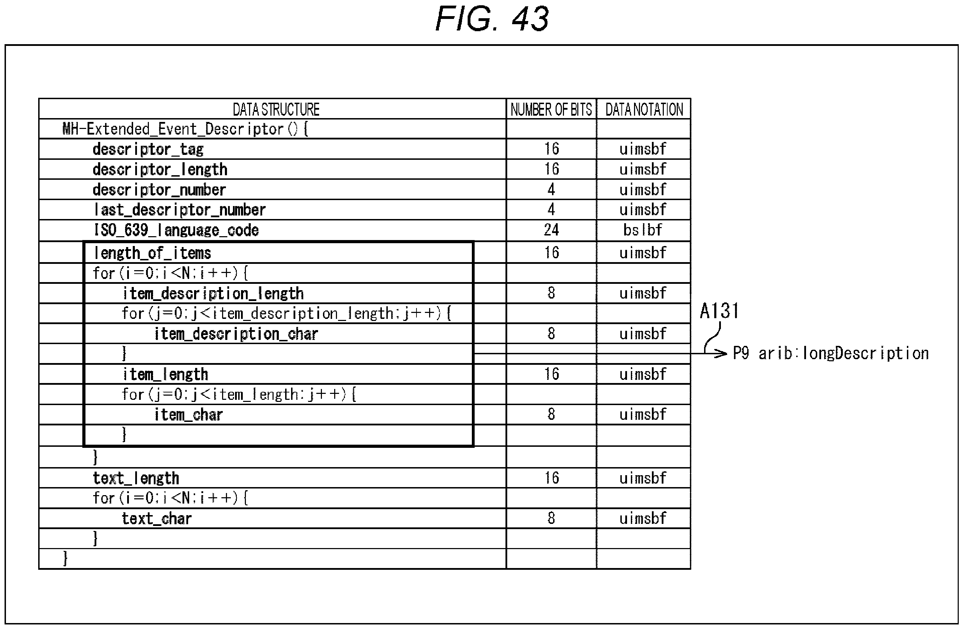

Fig. 43 is a diagram showing the syntax of MH-Extended_Event_Descriptor().

MH-Extended_Event_Descriptor() is written in descriptor() in MH-EIT.

As indicated by an enclosing frame, MH-Extended_Event_Descriptor() includes length_of_items, item_description_length, item_description_char, item_length, and item_char. Item_description_char, the data length of which is represented by item_description_length, represents an item of detailed program information. item_char, the data length of which is represented by item_length, represents description of the item.

These descriptions are the reference sources of the property information P9 "arib:longDescription". As indicated by an arrow A131, the STB 101 extracts the values of length_of_items, item_description_length, item_description_char, item_length, and item_char, and generates detailed program information on the basis of the individual items. The STB 101 stores the generated detailed program information in a memory in the STB 101 as the property information P9 to be used for CreateObject.

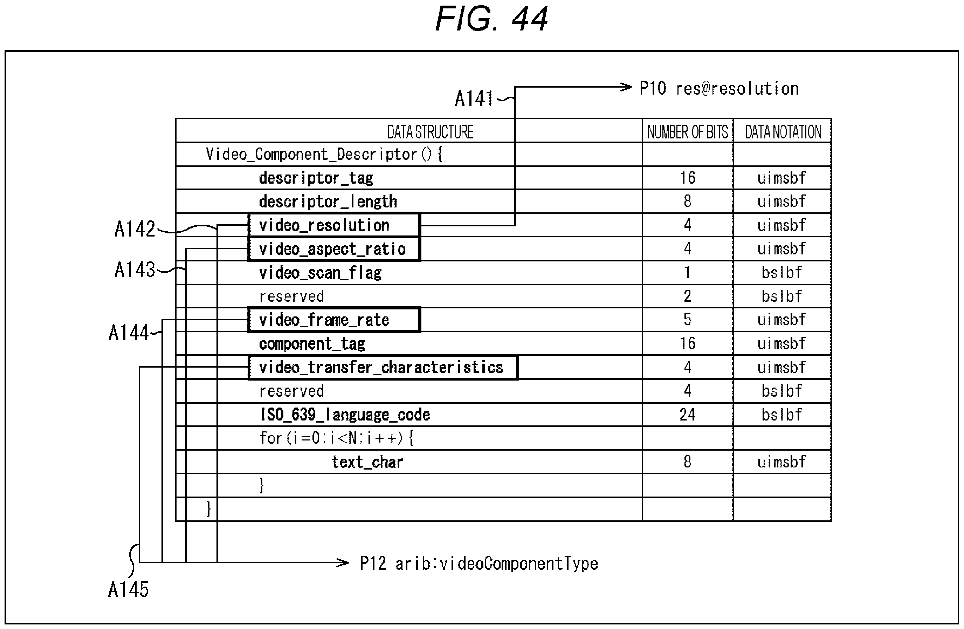

Fig. 44 is a diagram showing the syntax of Video_Component_Descriptor().

Video_Component_Descriptor() is written in descriptor() in MH-EIT. Furthermore, Video_Component_Descriptor() is also included in MPT. Video_Component_Descriptor() in MPT may also be referenced.

As indicated by enclosing frames, Video_Component_Descriptor() includes video_resolution, video_aspect_ratio, video_frame_rate, and video_transfer_characteristics.

Among these descriptions, video_resolution is the reference source of the property information P10 "res@resolution". As indicated by an arrow A141, the STB 101 extracts the value of video_resolution and stores the value in a memory in the STB 101 as the property information P10 to be used for CreateObject.

video_resolution, video_aspect_ratio, video_frame_rate, and video_transfer_characteristics are the reference sources of the property information P12 "arib:videoComponentType". As indicated by arrows A142 to A145, the STB 101 extracts the values of video_resolution, video_aspect_ratio, video_frame_rate, and video_transfer_characteristics, and sets component_type on the basis of a combination of the values of video_resolution and video_aspect_ratio. The STB 101 stores component_type, as set above, in a memory in the STB 101 as the property information P12 to be used for CreateObject.

Note that component_type may also be set on the basis of a combination of the four values of video_resolution, video_aspect_ratio, video_frame_rate, and video_transfer_characteristics.

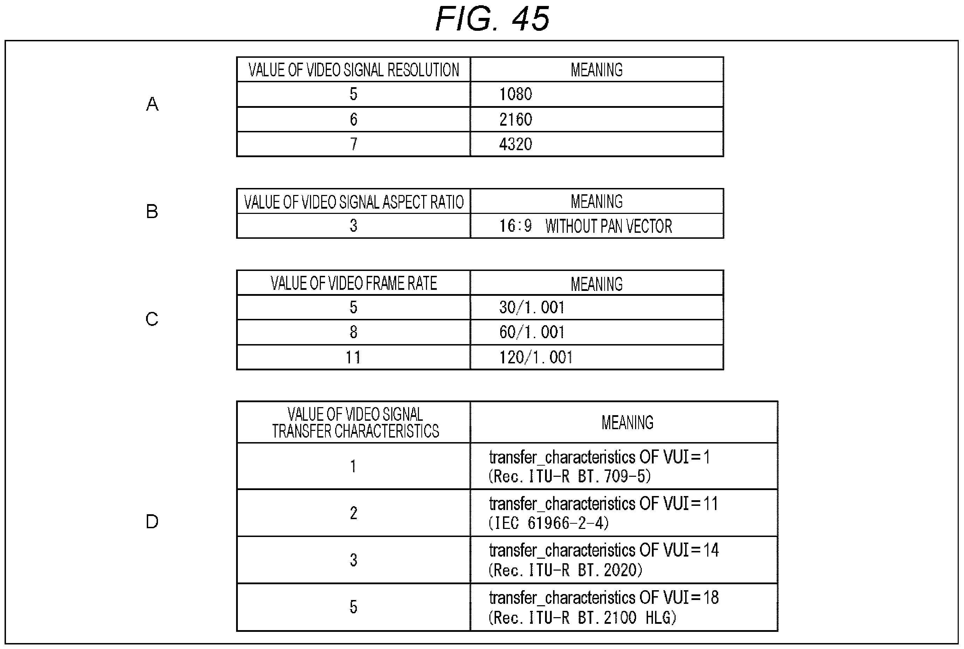

Fig. 45 is a diagram showing meanings of values of information included in Video_Component_Descriptor().

A to D of Fig. 45 show the meanings of values of video_resolution, video_aspect_ratio, video_frame_rate, and video_transfer_characteristics, respectively.

As shown in A of Fig. 45, for example, the value 6 of video_resolution represents that the vertical resolution of a video signal is 2160 (4K). As shown in B of Fig. 45, for example, the value 3 of video_aspect_ratio represents that the video signal aspect ratio is 16:9.

As shown in C of Fig. 45, for example, the value 8 of video_frame_rate represents that the video frame rate is 60/1.001. As shown in D of Fig. 45, for example, the value 3 of video_transfer_characteristics represents VUI transfer_characteristics=14, that is, BT.2020.

The STB 101 sets the property information P10 by using any of the values of video_resolution having these meanings. Furthermore, the STB 101 sets the property information P12 by using a combination of values of, for example, video_resolution and video_aspect_ratio having these meanings.

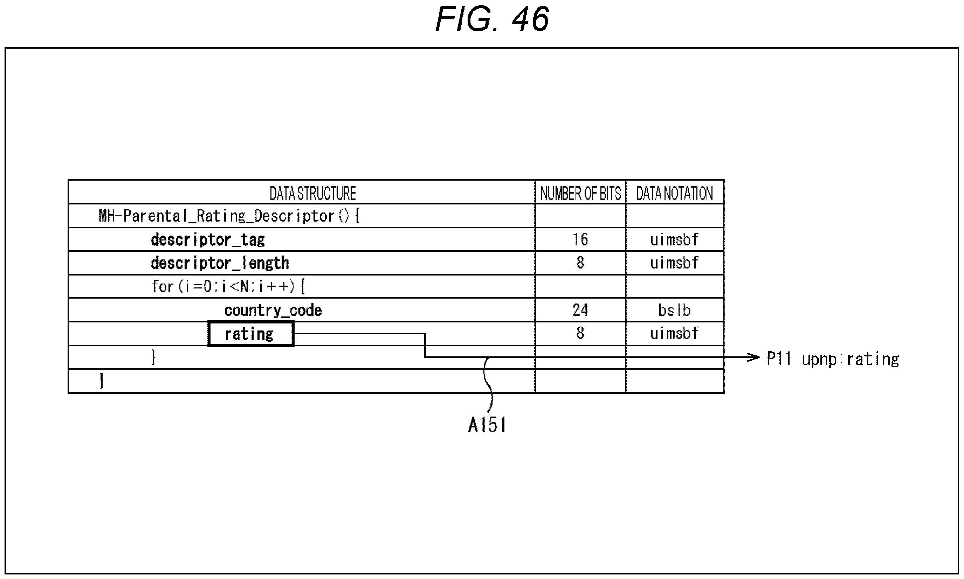

Fig. 46 is a diagram showing the syntax of MH-Parental_Rating_Descriptor().

MH-Parental_Rating_Descriptor() is written in descriptor() in MH-EIT. Additionally, MH-Parental_Rating_Descriptor() is also included in MPT and MH-SDT. MH-Parental_Rating_Descriptor() in MPT or MH-Parental_Rating_Descriptor() in MH-SDT may also be referenced.

As indicated by an enclosing frame, rating is included in MH-Parental_Rating_Descriptor().

Rating is the reference source of the property information P11 "upnp:rating". As indicated by an arrow A151, the STB 101 extracts the value of rating and stores the value in a memory in the STB 101 as the property information P11 to be used for CreateObject.

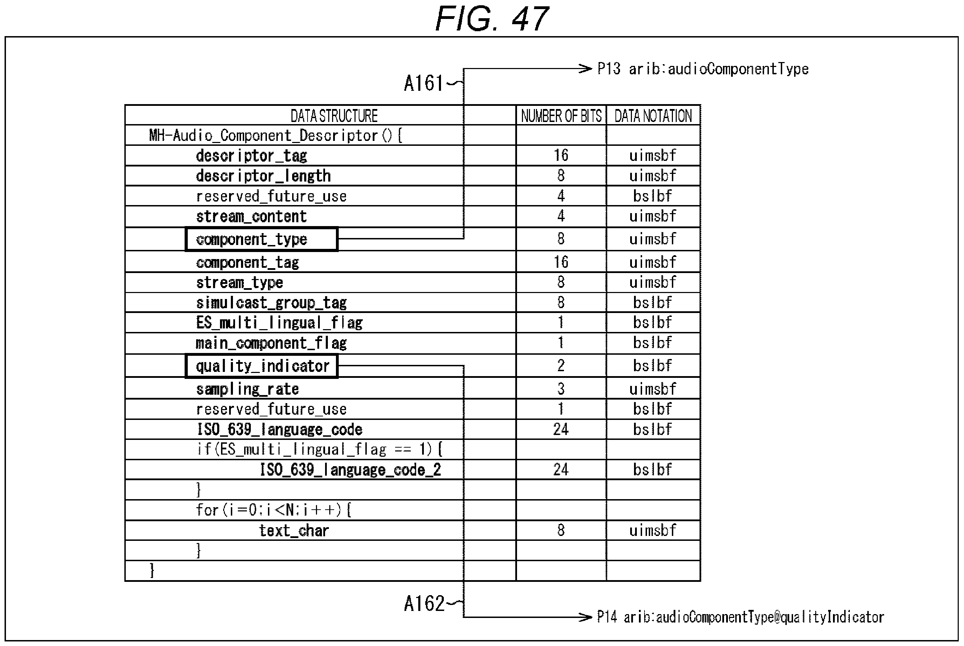

Fig. 47 is a diagram showing the syntax of MH-Audio_Component_Descriptor().

MH-Audio_Component_Descriptor() is written in descriptor() in MH-EIT. Additionally, MH-Audio_Component_Descriptor() is also included in MPT. MH-Audio_Component_Descriptor() in MPT may also be referenced.

As indicated by enclosing frames, MH-Audio_Component_Descriptor() includes component_type and quality_indicator.

component_type is the reference source of the property information P13 "arib:audioComponentType". As indicated by an arrow A161, the STB 101 extracts the value of component_type and stores the value in a memory in the STB 101 as the property information P13 to be used for CreateObject.

quality_indicator is the reference source of the property information P14 "arib:audioComponentType@qualityIndicator". As indicated by an arrow A162, the STB 101 extracts the value of quality_indicator and stores the value in a memory in the STB 101 as the property information P14 to be used for CreateObject.

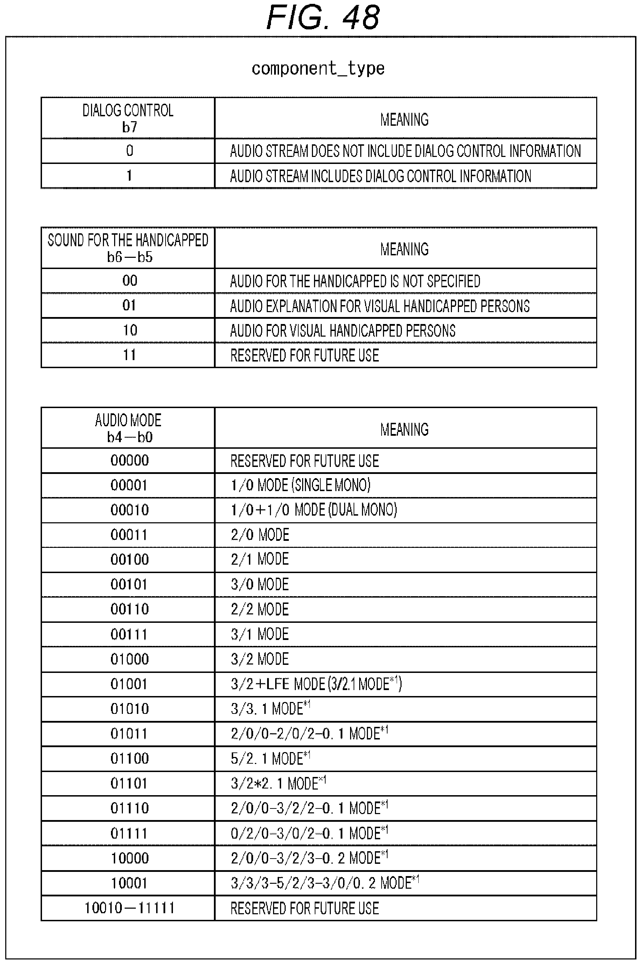

Fig. 48 is a diagram showing meanings of values of component_type.

Out of 8 bits constituting component_type, bit b7 represents information regarding dialog control, and bits b6-b5 represent information regarding audio for the handicapped. Bits b4-b0 represent information regarding the audio mode.

The STB 101 sets the property information P13 by using values of component_type having these meanings.

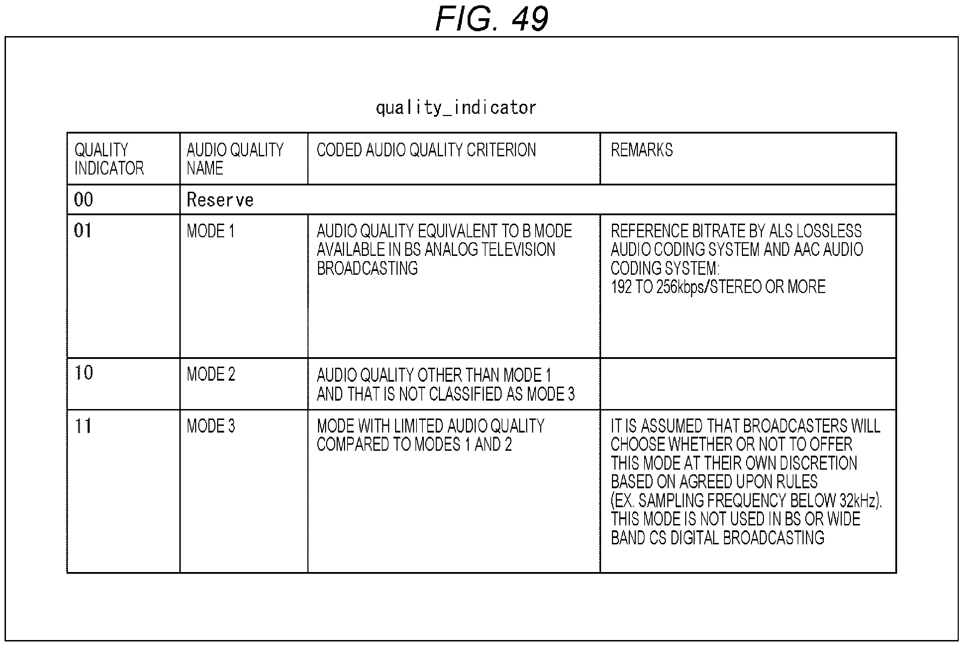

Fig. 49 is a diagram showing meanings of values of quality_indicator.

For example, the value 01 of quality_indicator, which is an audio quality indicator, represents that the audio quality name is mode 1 and the coded audio quality criterion is the audio quality equivalent to B mode available in BS analog television broadcasting. The value 10 of the audio quality indicator represents that the audio quality name is mode 2 and the coded audio quality criterion is the audio quality other than mode 1 and is not classified as mode 3. The value 11 of the audio quality indicator represents that the audio quality name is mode 3 and the coded audio quality criterion is the mode with limited audio quality compared to modes 1 and 2.

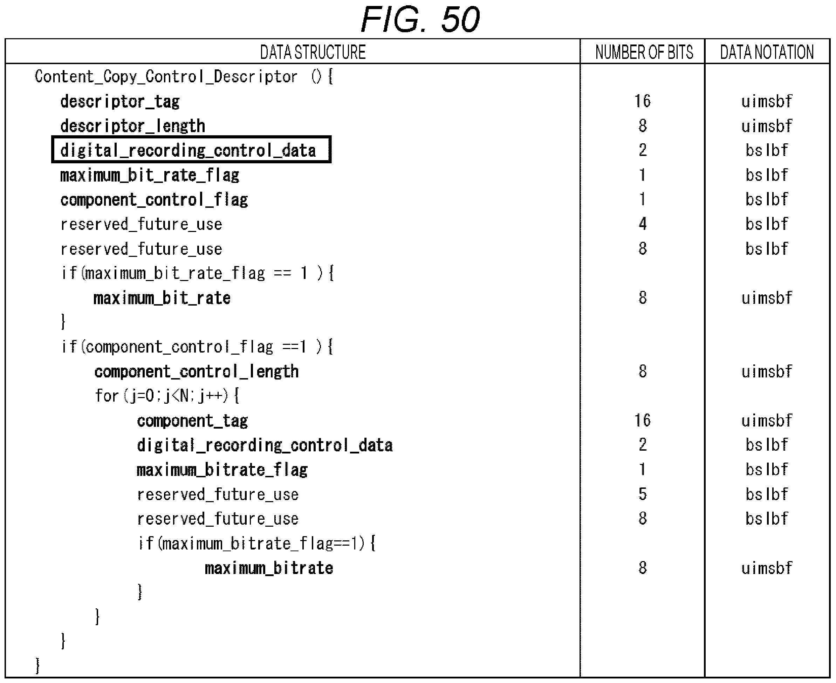

Fig. 50 is a diagram showing the syntax of Content_Copy_Control_Descriptor().

Content_Copy_Control_Descriptor() is written in descriptor() in MH-EIT. Additionally, Content_Copy_Control_Descriptor() is also included in MPT and MH-SDT. Content_Copy_Control_Descriptor() in MPT or Content_Copy_Control_Descriptor() in MH-SDT may also be referenced.

As indicated by an enclosing frame, digital_recording_control_data is written in Content_Copy_Control_Descriptor(). digital_recording_control_data represents whether or not copying is permitted.

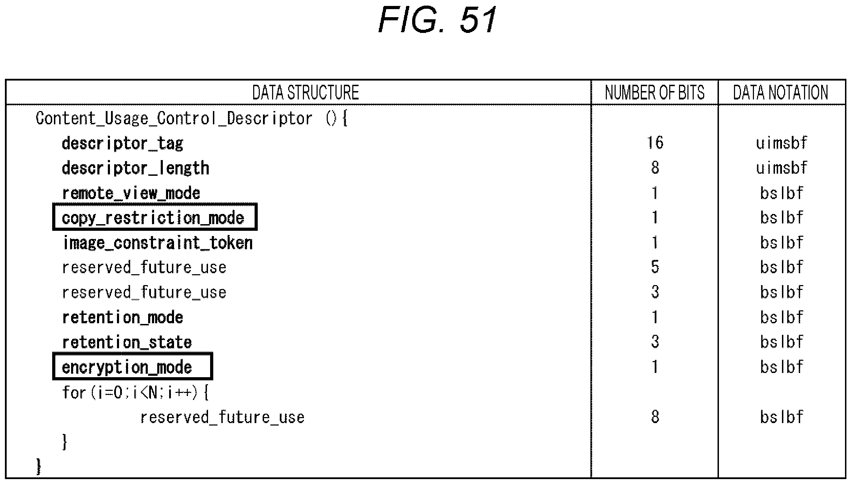

Fig. 51 is a diagram showing the syntax of Content_Usage_Control_Descriptor().

Content_Usage_Control_Descriptor() is written in descriptor() in MH-EIT. Additionally, Content_Usage_Control_Descriptor() is also included in MPT and MH-SDT. Content_Usage_Control_Descriptor() in MPT or Content_Usage_Control_Descriptor() in MH-SDT may also be referenced.

As indicated by enclosing frames, copy_restriction_mode and encryption_mode are written in Content_Usage_Control_Descriptor(). encryption_mode indicates whether or not encryption is required when a copy is made. copy_restriction_mode represents restriction on the number of copies.

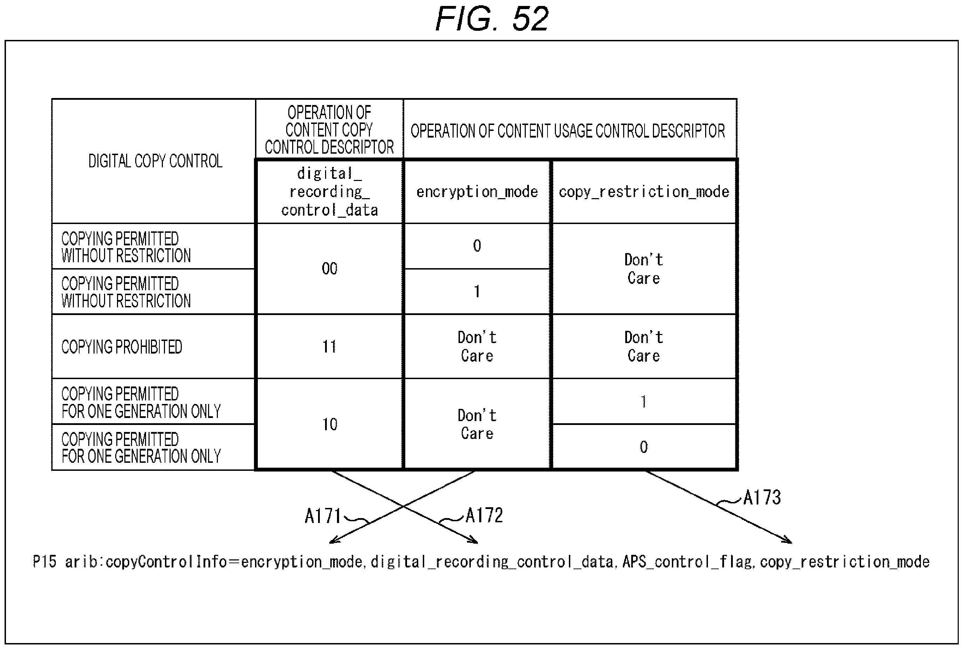

Fig. 52 is a diagram showing an example of reference for the property information P15.

The STB 101 sets the property information P15 "arib:copyControlInfo" to a value using two descriptors, Content_Copy_Control_Descriptor() and Content_Usage_Control_Descriptor(), as the reference sources.

Specifically, the STB 101 extracts the value of digital_recording_control_data in Content_Copy_Control_Descriptor() and the values of copy_restriction_mode and encryption_mode in Content_Usage_Control_Descriptor().

As pointed by arrows A171, A172, and A173, the STB 101 generates the property information P15 to be used for CreateObject by arranging and separating by commas the value of encryption_mode in Content_Usage_Control_Descriptor(), the value of digital_recording_control_data in Content_Copy_Control_Descriptor(), the value of APS_control_flag, and the value of copy_restriction_mode in Content_Usage_Control_Descriptor(), and stores the property information P15 in a memory in the STB 101.

Note that APS_control_flag, which represents whether or not analog output is allowed, is set to a value defined in a standard for MMT broadcasting. For example, if analog output is allowed, APS_control_flag is set to a value of 0, whereas if analog output is not allowed, APS_control_flag is set to a value of 1.

In this way, it is possible to set one type of property information by using a plurality of types of information pieces as the reference sources and using a combination of the information pieces of the corresponding reference sources.

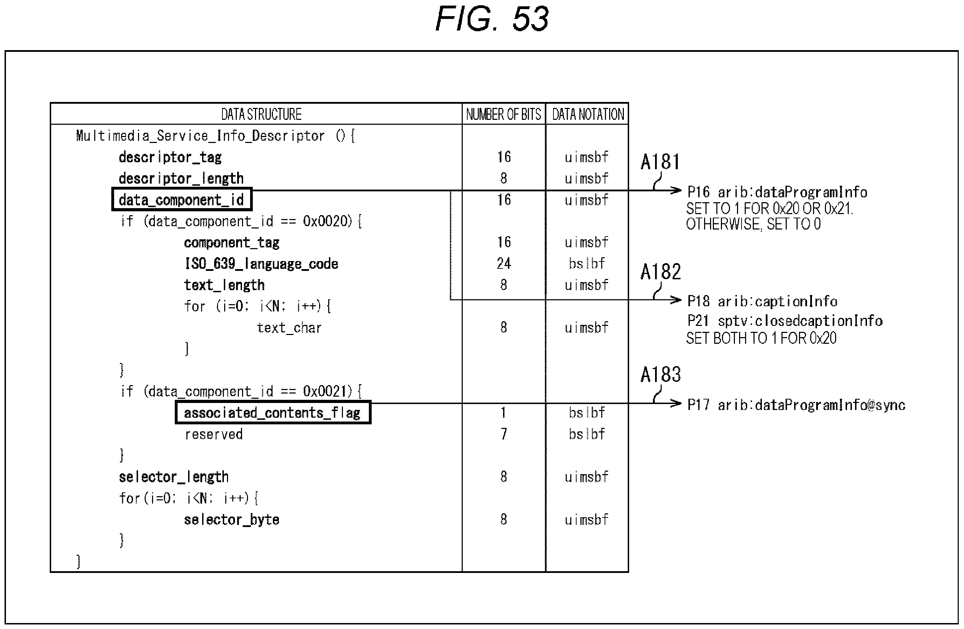

Fig. 53 is a diagram showing the syntax of Multimedia_Service_Info_Descriptor().

Multimedia_Service_Info_Descriptor() is written in descriptor() in MH-EIT.

As indicated by enclosing frames, Multimedia_Service_Info_Descriptor() includes data_component_id and associated_contents_flag.

data_component_id is the reference source of the property information P16 "arib:dataProgramInfo". If data_component_id is 0x20 or 0x21, as indicated by an arrow A181, the STB 101 sets the property information P16 "arib:dataProgramInfo" to a value of 1; otherwise to a value of 0.

In addition, data_component_id is the reference source of the property information P18 "arib:captionInfo" and the reference source of the property information P21 "sptv:closedcaptionlnfo". If data_component_id is 0x20, the STB 101 sets both the property information P18 "arib:captionInfo"and the property information P21 "sptv:closedcaptionInfo" to a value of 1, as indicated by an arrow A182.

associated_contents_flag is the reference source of the property information P17 "arib:dataProgramInfo@sync". As indicated by an arrow A183 in Fig. 53, the STB 101 extracts the value of associated_contents_flag and stores the value in a memory in the STB 101 as the property information P17 to be used for CreateObject.

### - Property information referencing MH-SDT

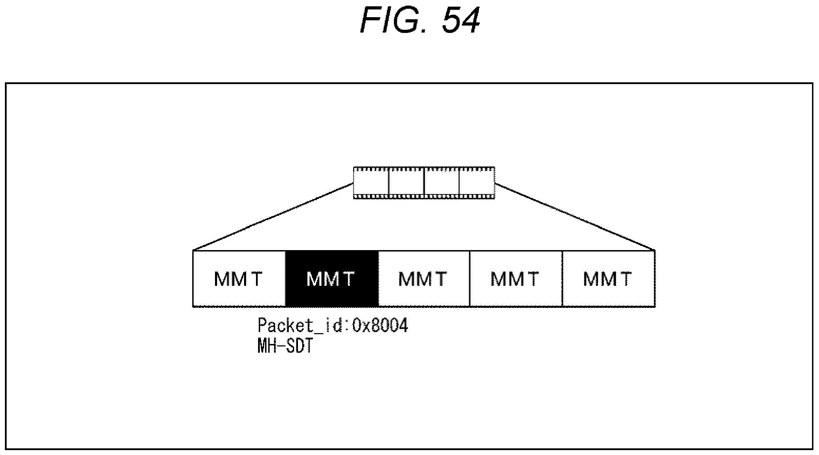

Fig. 54 is a diagram illustrating an example of MMT transmission data.

As shown in Fig. 54, if the value of Packet_id is 0x8004, MH-SDT is contained in the payload.

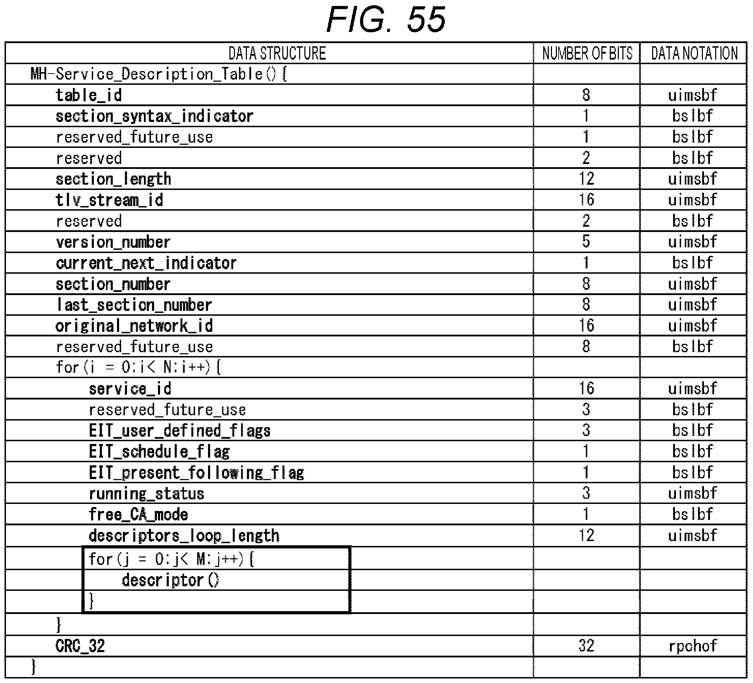

Fig. 55 is a diagram showing the syntax of MH-SDT.

As indicated by an enclosing frame, MH-SDT includes descriptor() .

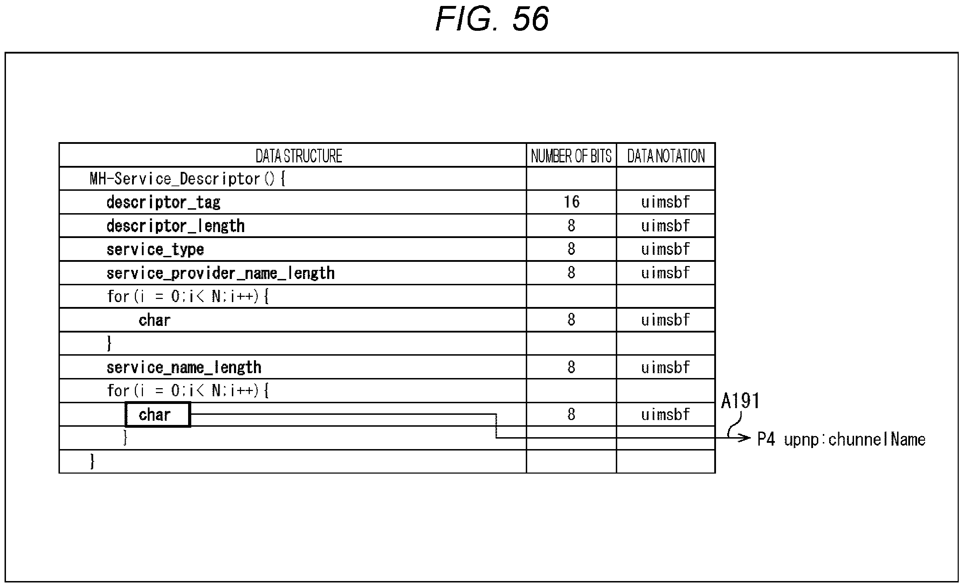

Fig. 56 is a diagram showing the syntax of MH-Service Descriptor().

MH-Service Descriptor() is written in descriptor() in MH-SDT. As indicated by an enclosing frame, MH-Service Descriptor() includes char as service_name. char represents the name of an organized channel.

char is the reference source of the property information P4 "upnp:chunnelName". As indicated by an arrow A191, the STB 101 extracts the value of char and stores the value in a memory in the STB 101 as the property information P4 to be used for CreateObject.

### - Property information referencing TLV packet

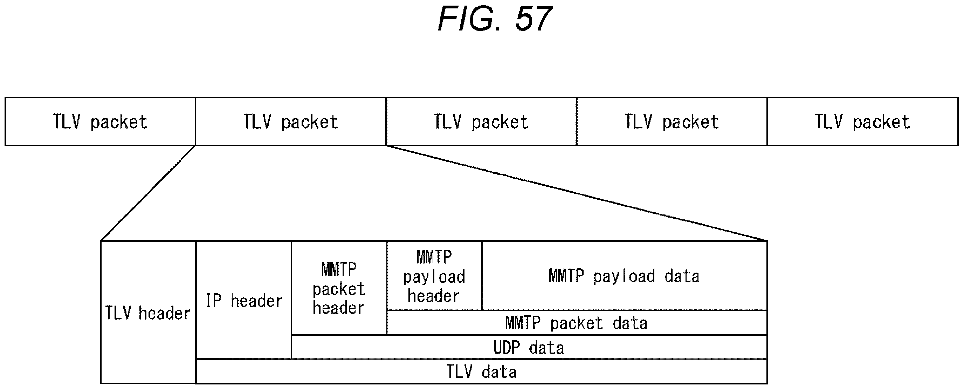

Fig. 57 is a diagram illustrating an example configuration of a TLV stream.

A TLV stream includes a sequence of TLV packets. As shown in the lower part of Fig. 57, a single TLV packet includes a TLV header and TLV data. As the TLV data, an IP packet is contained therein, and an MMTP packet as described above is contained in the IP packet.

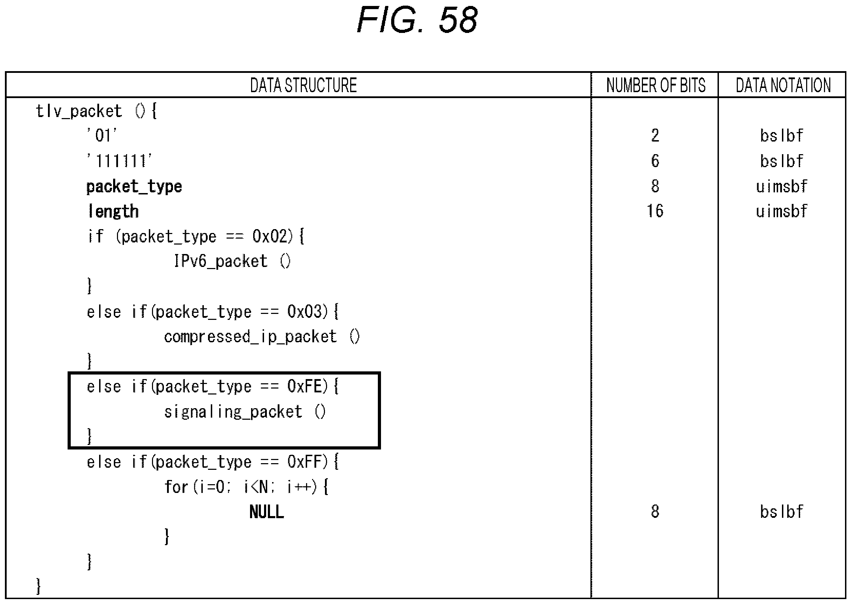

Fig. 58 is a diagram showing the syntax of TLV packet.

packet_type represents the type of data contained in the TLV packet. length represents the length of data in the TLV packet. Data type is represented by packet_type and the length of data is represented by length, whereby any variable length data can be contained in a TLV packet.

As indicated by an enclosing frame, a TLV packet includes signaling_packet(). If the value of packet_type is 0xFE, TLV-SI, which is a transmission control signal, is written in signaling_packet().

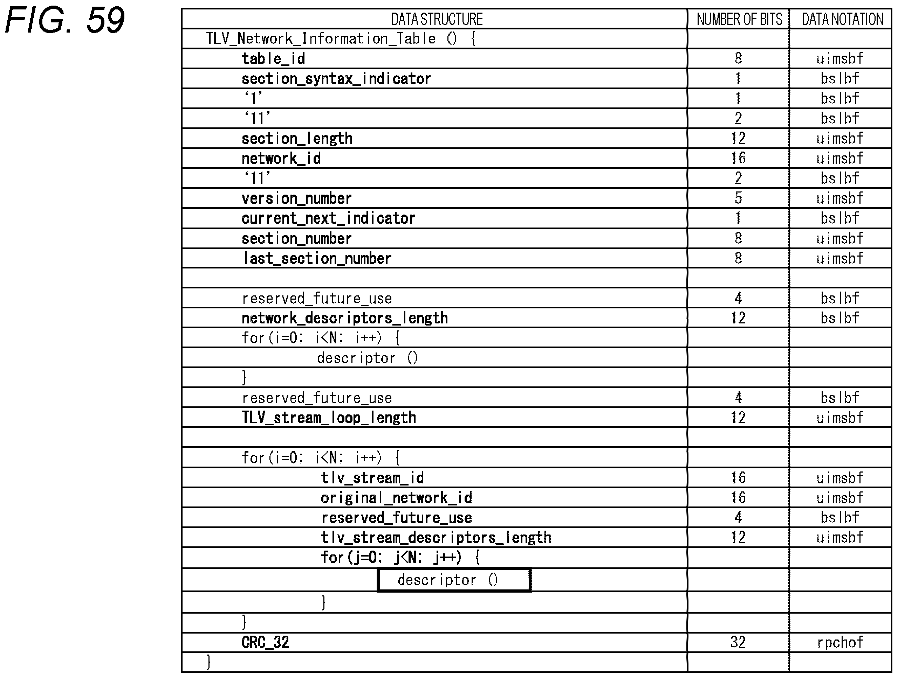

Fig. 59 is a diagram showing the syntax of TLV-NIT, which is a TLV-SI.

As indicated by an enclosing frame, TLV-NIT includes descriptor(). Various descriptors are included in descriptor().

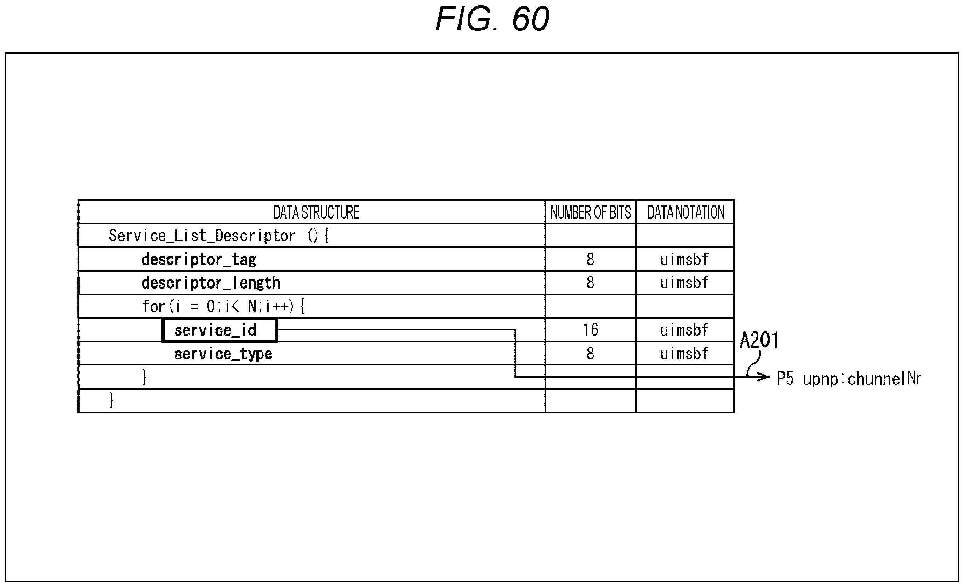

Fig. 60 is a diagram showing the syntax of Service_List_Descriptor().

Service_List_Descriptor() is written in descriptor() in TLV-NIT. Service_List_Descriptor() is a descriptor that provides a list of services with service IDs and service types.

As indicated by an enclosing frame, Service_List_Descriptor() includes service_id.

service _id is the reference source of the property information P5 "upnp:chunnelNr". As indicated by an arrow A201, the STB 101 extracts the value of service _id and stores the value in a memory in the STB 101 as the property information P5 to be used for CreateObject.

### - Property information referencing a message

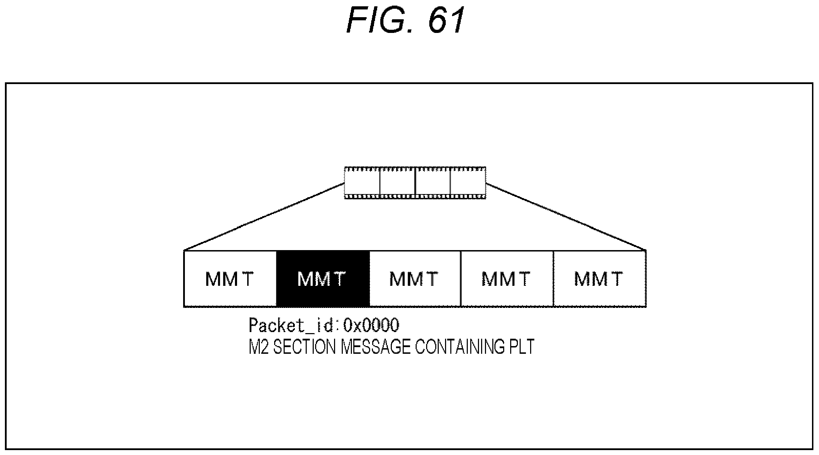

Fig. 61 is a diagram illustrating an example of MMT transmission data.

As shown in Fig. 61, if the value of Packet_id is 0x0000, an M2 section message containing PLT is contained in the payload.

MMT control messages include, for example, in addition to an M2 section message, a Package Access (PA) message, a CA message, an M2 short section message, and a data transmission message. For example, a PA message serves as an entry point for MMT-SI and is used for transmitting various MMT-SI tables.

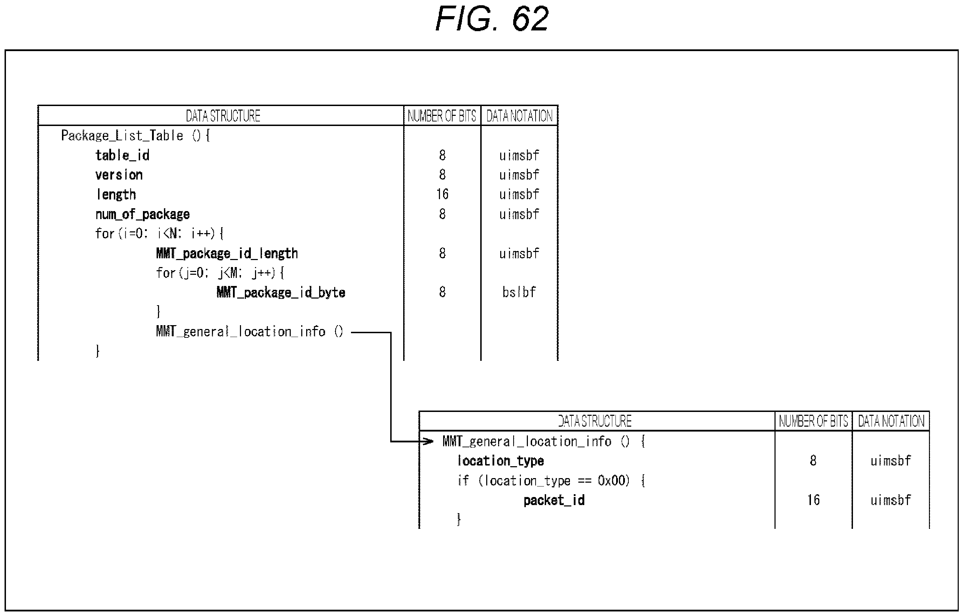

Fig. 62 is a diagram showing the syntax of PLT included in an M2 section message.

As shown in Fig. 62, PLT includes MMT_general_location_info(). As pointed by an arrow, MMT_general_location_info() includes location_type, packet_id, and others. packet_id specifies the PID of MPT. MPT is a table that gives the information constituting a package, such as a list of assets and locations of the assets on a network.

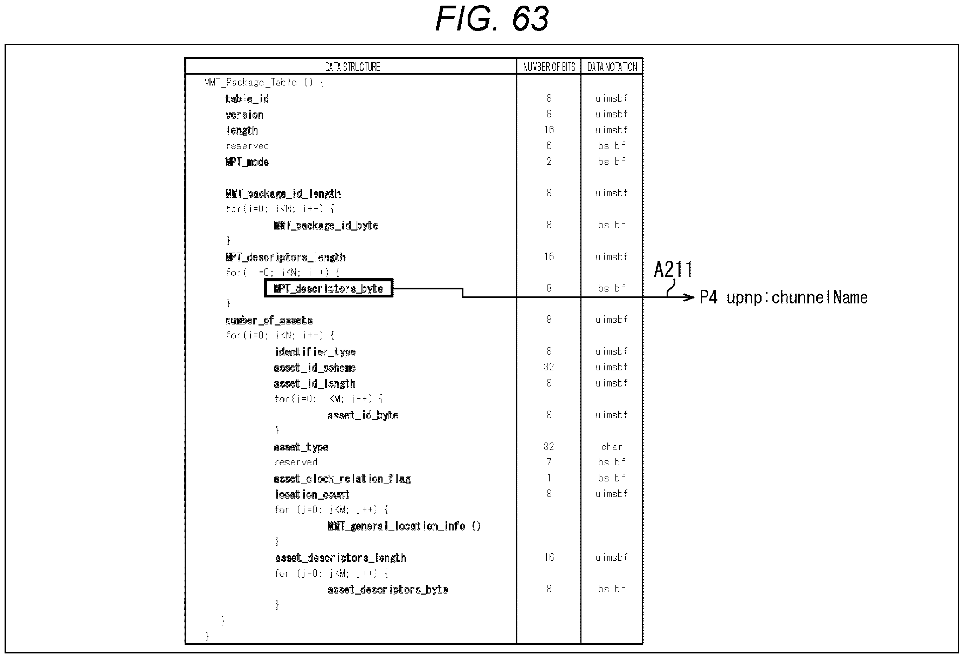

Fig. 63 is a diagram showing the syntax of MPT.

As indicated by an enclosing frame, MPT includes MPT_descriptors_byte.

MPT_descriptors_byte is the reference source of the property information P4 "upnp:chunnelName". As indicated by an arrow A211, the STB 101 extracts the value of MPT_descriptors_byte and stores the value in a memory in the STB 101 as the property information P4 to be used for CreateObject.

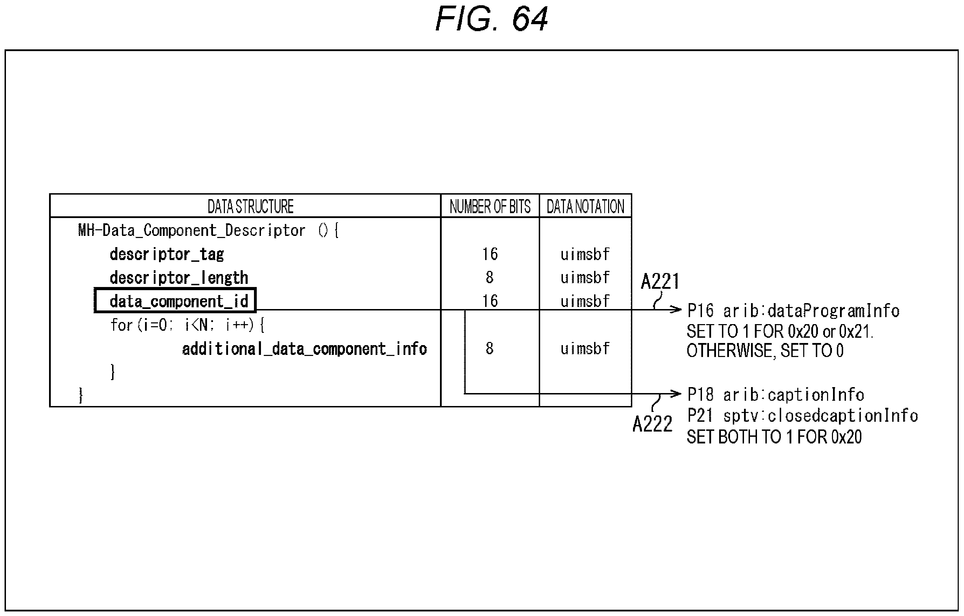

Fig. 64 is a diagram showing the syntax of MH-Data_Component_Descriptor().

MH-Data_Component_Descriptor() is a descriptor included in MPT. descriptor() is also included in MPT.

As indicated by an enclosing frame, MH-Data_Component_Descriptor() includes data_component_id.

data_component_id is the reference source of the property information P16 "arib:dataProgramInfo". If data_component_id is 0x20 or 0x21, as indicated by an arrow A221, the STB 101 sets the property information P16 "arib:dataProgramInfo" to a value of 1; otherwise to a value of 0.

In addition, data_component_id is the reference source of the property information P18 "arib:captionInfo" and the reference source of the property information P21 "sptv:closedcaptionlnfo". If data_component_id is 0x20, the STB 101 sets both the property information P18 "arib:captionInfo"and the property information P21 "sptv:closedcaptionInfo" to a value of 1, as indicated by an arrow A182.

### <Configuration and operation of STB>

### - Configuration of STB

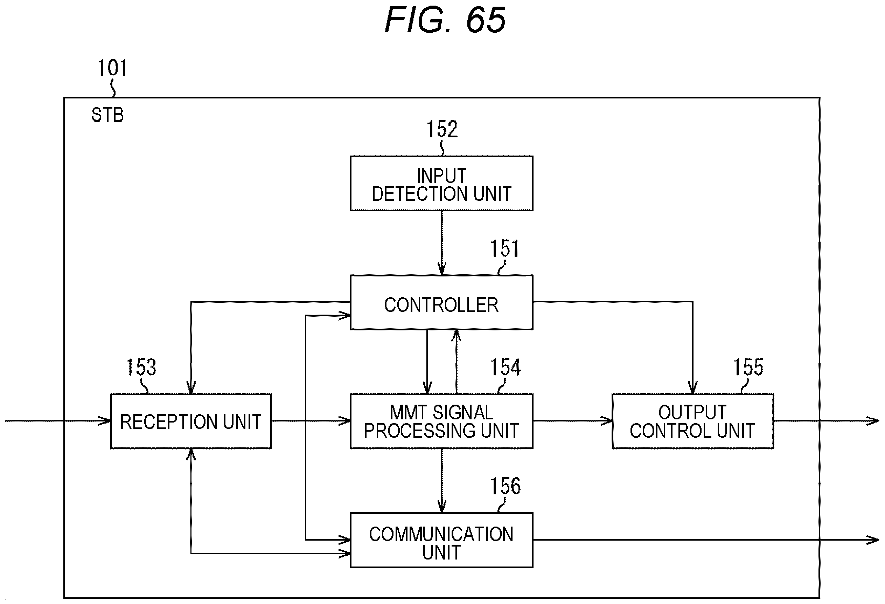

Fig. 65 is a block diagram illustrating an example hardware configuration of the STB 101.

The STB 101 includes a controller 151, an input detection unit 152, a reception unit 153, an MMT signal processing unit 154, an output control unit 155, and a communication unit 156.

The controller 151 includes a CPU, a ROM, a RAM, a memory, and the like. The controller 151 causes the CPU to execute a predetermined program and controls overall operations of the STB 101 in response to a user operation represented by a signal supplied from, for example, the input detection unit 152.

The input detection unit 152 detects a user operation performed with a remote controller or the like, and outputs a signal that represents specifics of the user operation to the controller 151. Operations performed by the user include, for example, selecting the content to be uploaded, selecting the destination device of upload, and selecting the recording medium.

The reception unit 153 receives a broadcast wave signal from an antenna (not illustrated), and performs various types of processing such as demodulation processing and error correction processing. The reception unit 153 outputs a TVL stream, as MMT content, to the MMT signal processing unit 154, the TVL stream being obtained by performing various types of processing.

In addition, in a case where the content is transmitted through a transmission path for communications, the reception unit 153 controls the communication unit 156 to receive the MMT content, and outputs a TVL stream obtained by performing predetermined processing on the content to the MMT signal processing unit 154. In this way, the reception unit 153 functions as an acquisition unit that acquires the 4K/8K content transmitted by using MMT.

The MMT signal processing unit 154 performs predetermined processing on the TLV stream supplied from the reception unit 153 to acquire the 4K/8K content transmitted by using MMT.

For example, in a case where the 4K/8K content is to be played back, the MMT signal processing unit 154 extracts video data and audio data from the TLV stream and decodes the extracted data. The MMT signal processing unit 154 outputs the video and audio data of the content obtained by decoding the data to the output control unit 155.

Furthermore, in a case where the 4K/8K content is to be uploaded to an external device such as the recorder 102 via a network, the MMT signal processing unit 154 outputs the 4K/8K content data to the communication unit 156.

The MMT signal processing unit 154 acquires, from a TLV stream, various types of control information such as messages, tables, and descriptors transmitted by using MMTP packets, and outputs the acquired control information to the controller 151.

The output control unit 155 supplies the video and audio data supplied from the MMT signal processing unit 154 to a TV connected to the STB 101, and causes the TV to output the video data and the audio data from a display and a speaker, respectively.

The communication unit 156 communicates with an external device such as the recorder 102 via a network constructed in the home or the like. For example, when CreateObject is finished, the communication unit 156 starts uploading the 4K/8K content to the external device.

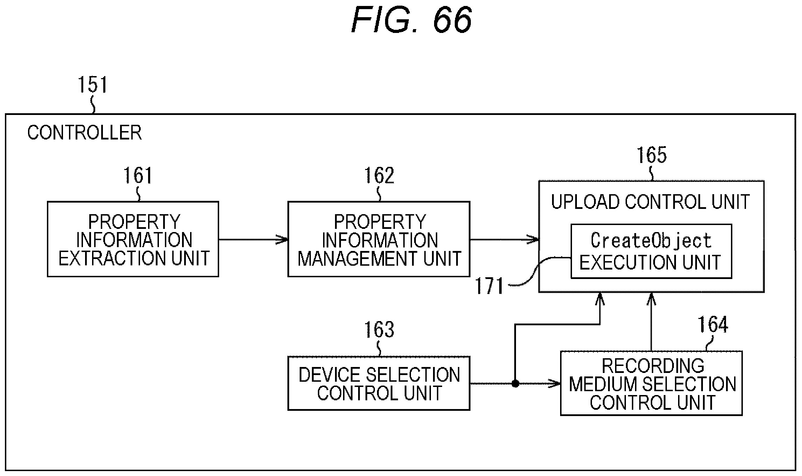

Fig. 66 is a block diagram illustrating an example functional configuration of the controller 151.

At least part of the functional units illustrated in Fig. 66 is implemented by executing a predetermined program, the executing performed by the CPU in the controller 151.

In the controller 151, a property information extraction unit 161, a property information management unit 162, a device selection control unit 163, a recording medium selection control unit 164, and an upload control unit 165 are implemented. The upload control unit 165 includes a CreateObject execution unit 171.

The property information extraction unit 161 extracts, from the information included in the control information supplied from the MMT signal processing unit 154, the information written in the reference sources described above, as the property information to be used for CreateObject. The property information extraction unit 161 outputs the extracted property information to the property information management unit 162.

The property information management unit 162 stores and manages, in a memory or the like, the property information supplied from the property information extraction unit 161. When CreateObject is executed, the property information management unit 162 outputs the property information stored and managed in the memory to the upload control unit 165.

The device selection control unit 163 performs the process of selecting a device (Fig. 6) including M-Search and the like by controlling the communication unit 156 to select a device to which the content is to be uploaded. Information regarding the selected device is supplied to the recording medium selection control unit 164 and to the upload control unit 165.

The recording medium selection control unit 164 performs the process of selecting a recording medium (Fig. 16) including GetRecordDestinations and GetRecordContainerID by controlling the communication unit 156 to select a recording medium on which the 4K/8K content is to be recorded. Information regarding the selected recording medium is supplied to the upload control unit 165.

The upload control unit 165 performs the process of uploading the content (Fig. 26) by controlling the communication unit 156.

The CreateObject execution unit 171 performs CreateObject on the destination device of the upload using the property information extracted from MMT transmission data and managed by the property information management unit 162. Specifically, the CreateObject execution unit 171 generates a CreateObject action that includes, as an argument, the property information managed by the property information management unit 162, and sends the CreateObject action to the destination device of upload. The CreateObject execution unit 171 functions as a sending control unit that controls transmission of the property information to the destination device of upload before 4K/8K content is uploaded.

The CreateObject execution unit 171 acquires importURI contained in the response that has been sent from the destination device of upload and received by the communication unit 156. The 4K/8K content is uploaded on the basis of the importURI acquired by the CreateObject execution unit 171.

### - Operation of STB

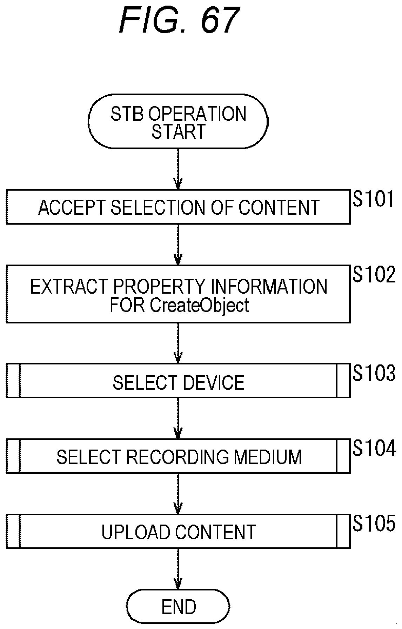

Referring to the flowchart in Fig. 67, the following describes operations of the STB 101 configured as above.

The process shown in Fig. 67 is basically similar to the process described with reference to Fig. 5 except that a process step of extracting the property information to be used for CreateObject from MMT transmission data is added.

That is, in step S101, the input detection unit 152 in the STB 101 accepts selection of the content to be uploaded. Information regarding the content to be uploaded as received by the input detection unit 152 is supplied to the controller 151.

In step S102, the property information extraction unit 161 extracts the property information to be used for CreateObject from the MMT transmission data. The property information extraction unit 161 outputs the extracted property information to the property information management unit 162, so that the property information is managed therein.

In step S103, the device selection control unit 163 performs the process of selecting a device. A process similar to the process described with reference to Fig. 6 is performed to select a device to which the content is to be uploaded.

In step S104, the recording medium selection control unit 164 performs the process of selecting a recording medium. A process similar to the process described with reference to Fig. 16 is performed to select a recording medium on which the content is to be recorded.

In step S105, the upload control unit 165 performs the process of uploading the content. The CreateObject execution unit 171 in the upload control unit 165 performs CreateObject using the property information managed by the property information management unit 162, and then upload of the content is started. When the upload of the content is finished, the process in Fig. 67 is ended.

Through the above process steps, the STB 101 can extract the property information from MMT transmission data and perform CreateObject on the basis of the extracted property information before uploading the 4K/8K content.

Furthermore, after CreateObject is finished, the STB 101 can upload the 4K/8K content to an external device via a network. Since 4K/8K content can be uploaded via a network, the moving over a network in use case 1, the saving of content in use case 2, and the streaming viewing in use case 3 with regard to the 4K/8K content are achieved in the network system in Fig. 31.

### <Modifications>

The foregoing has described the case where the device that uploads 4K/8K content is an STB; however, the present technology can also be applied to cases where 4K/8K content is uploaded from any of various devices that can receive content transmitted by using MMT, such as PCs, TVs, recorders (recording devices), game devices, smartphones, and tablet terminals.

### - Example configuration of computer

The aforementioned series of process steps can be executed by hardware, or can be executed by software. In a case where the series of process steps is to be executed by software, programs included in the software are installed from a program recording medium onto a computer incorporated into special-purpose hardware, a general-purpose computer, or the like.

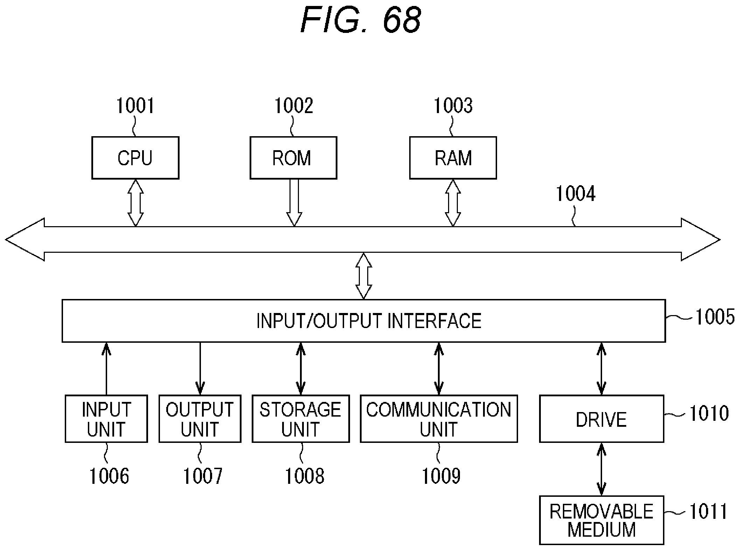

Fig. 68 is a block diagram illustrating an example hardware configuration of a computer in which the aforementioned series of process steps is executed by programs.

A central processing unit (CPU) 1001, a read only memory (ROM) 1002, and a random access memory (RAM) 1003 are connected to one another by a bus 1004.

Moreover, an input/output interface 1005 is connected to the bus 1004. To the input/output interface 1005, an input unit 1006 including a keyboard, a mouse, or the like and an output unit 1007 including a display, a speaker, or the like are connected. Furthermore, to the input/output interface 1005, a storage unit 1008 including a hard disk, a non-volatile memory, or the like, a communication unit 1009 including a network interface or the like, and a drive 1010 that drives a removable medium 1011 are connected.

In the computer configured as above, the CPU 1001 performs the aforementioned series of process steps by, for example, loading a program stored in the storage unit 1008 into the RAM 1003 via the input/output interface 1005 and the bus 1004 and executing the program.

Programs to be executed by the CPU 1001 are recorded on, for example, the removable medium 1011 or provided via a wired or wireless transmission medium such as a local area network, the Internet, or digital broadcasting, and installed on the storage unit 1008.

Note that the programs executed by the computer may be programs for process steps to be performed in time series in the order described herein, or may be programs for process steps to be performed in parallel or on an as-needed basis when, for example, a call is made.

Note that a system herein means a set of a plurality of components (apparatuses, modules (parts), and the like) regardless of whether or not all the components are within the same housing. Therefore, either of a plurality of apparatuses contained in separate housings and connected via a network and one apparatus in which a plurality of modules is contained in one housing is a system.

The effects described herein are examples only and are not restrictive, and other effects may be provided.

Embodiments of the present technology are not limited to the above-described embodiments, and various modifications can be made thereto without departing from the gist of the present technology.

For example, the present technology can be in a cloud computing configuration in which one function is distributed among, and handled in collaboration by, a plurality of devices via a network.

Furthermore, each of the steps described above with reference to the flowcharts can be executed not only by one device but also by a plurality of devices in a shared manner.

Moreover, in a case where one step includes a plurality of processes, the plurality of processes included in the one step can be executed not only by one device but also by a plurality of devices in a shared manner.

### - Examples of configuration combination

The present technology may have the following configurations.
(1) An information processing device including:
   a content acquisition unit that acquires content transmitted by using MMT; and
   an extraction unit that extracts information from transmission data based on MMT, the information being to be sent, as property information regarding the content, to an external device to which the content is to be sent via a network.
(2) The information processing device according to (1), further including:
   a sending control unit that sends the information extracted from the transmission data to the external device before the content.
(3) The information processing device according to (1) or (2), further including:
   an information management unit that manages the information extracted from the transmission data as information to be used for CreateObject.
(4) The information processing device according to (3), in which
   the sending control unit sends the information extracted from the transmission data as an argument of a CreateObject action.
(5) The information processing device according to (4), in which
   the sending control unit sends information obtained by combining a plurality of types of information pieces extracted from the transmission data, as one type of the property information, to the external device.
(6) The information processing device according to (1), in which
   the extraction unit extracts information to be sent as the property information from an MMTP packet included in the transmission data.
(7) The information processing device according to (6), in which
   the extraction unit extracts a plurality of types of information pieces to be sent as the property information from at least one of a parameter included in a control message for MMT, a parameter included in a table contained in the control message, or a parameter included in a descriptor contained in the table.
(8) The information processing device according to (1), in which
   the extraction unit extracts information to be sent as the property information from a TLV packet used for transmitting an MMTP packet.
(9) The information processing device according to (8), in which
   the extraction unit extracts from Service Information, which is transmitted by using a TLV packet.
(10) An information processing method including:
   acquiring content transmitted by using MMT, the acquiring being performed by an information processing device; and
   extracting information from an MMTP packet, the information being to be sent, as property information regarding the content, to an external device to which the content is to be sent via a network, the extracting being performed by the information processing device.
(11) A program causing a computer to execute processes of:
   acquiring content transmitted by using MMT; and
   extracting information from an MMTP packet, the information being to be sent, as property information regarding the content, to an external device to which the content is to be sent via a network.

### REFERENCE SIGNS LIST

- 1: Recorder
- 2: TV
- 3: STB
- 4: Recorder
- 5: Mobile terminal
- 11: STB
- 12: Recorder
- 13: Router
- 21: Optical disk
- 22: HDD
- 101: STB
- 102: Recorder
- 151: Controller
- 152: Input detection unit
- 153: Reception unit
- 154: MMT signal processing unit
- 155: Output control unit
- 156: Communication unit
- 161: Property information extraction unit
- 162: Property information management unit
- 163: Device selection control unit
- 164: Recording medium selection control unit
- 165: Upload control unit
- 171: CreateObject execution unit

## Claims

1. An information processing device comprising:
a content acquisition unit that acquires content transmitted by using MMT; and
an extraction unit that extracts information from transmission data based on MMT, the information being to be sent, as property information regarding the content, to an external device to which the content is to be sent via a network.

2. The information processing device according to claim 1, further comprising:
a sending control unit that sends the information extracted from the transmission data to the external device before the content.

3. The information processing device according to claim 2, further comprising:
an information management unit that manages the information extracted from the transmission data as information to be used for CreateObject.

4. The information processing device according to claim 3, wherein
the sending control unit sends the information extracted from the transmission data as an argument of a CreateObject action.

5. The information processing device according to claim 4, wherein
the sending control unit sends information obtained by combining a plurality of types of information pieces extracted from the transmission data, as one type of the property information, to the external device.

6. The information processing device according to claim 1, wherein
the extraction unit extracts information to be sent as the property information from an MMTP packet included in the transmission data.

7. The information processing device according to claim 6, wherein
the extraction unit extracts a plurality of types of information pieces to be sent as the property information from at least one of a parameter included in a control message for MMT, a parameter included in a table contained in the control message, or a parameter included in a descriptor contained in the table.

8. The information processing device according to claim 1, wherein
the extraction unit extracts information to be sent as the property information from a TLV packet used for transmitting an MMTP packet.

9. The information processing device according to claim 8, wherein
the extraction unit extracts from Service Information, which is transmitted by using a TLV packet.

10. An information processing method comprising:
acquiring content transmitted by using MMT, the acquiring being performed by an information processing device; and
extracting information from an MMTP packet, the information being to be sent, as property information regarding the content, to an external device to which the content is to be sent via a network, the extracting being performed by the information processing device.

11. A program causing a computer to execute processes of:
acquiring content transmitted by using MMT; and
extracting information from an MMTP packet, the information being to be sent, as property information regarding the content, to an external device to which the content is to be sent via a network.
